(19) Europäisches Patentamt
European Patent Office
Office européen des brevets

(11) EP 4 614 655 A1

(12) EUROPEAN PATENT APPLICATION

(43) Date of publication:
**10.09.2025 Bulletin 2025/37**

(21) Application number: **25161878.1**

(22) Date of filing: **05.03.2025**

(51) International Patent Classification (IPC):
***H01M 10/0567*** *(2010.01)* ***H01M 10/0569*** *(2010.01)*
***H01M 50/449*** *(2021.01)* ***H01M 50/46*** *(2021.01)*

(52) Cooperative Patent Classification (CPC):
**H01M 10/0567; H01M 10/0569; H01M 50/449; H01M 50/461;** H01M 10/0525

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.03.2024 CN 202410254699**

(71) Applicant: **Ningde Amperex Technology Limited**
**Ningde City, Fujian Province 352100 (CN)**

(72) Inventors:
- **LIU, Jianyu**
  **Ningde City, Fujian Province 352100 (CN)**
- **FENG, Bo**
  **Ningde City, Fujian Province 352100 (CN)**
- **TANG, Chao**
  **Ningde City, Fujian Province 352100 (CN)**
- **YANG, Shuaile**
  **Ningde City, Fujian Province 352100 (CN)**

(74) Representative: **Icosa**
**83 avenue Denfert-Rochereau**
**75014 Paris (FR)**

# (54) SECONDARY BATTERY AND ELECTRONIC APPARATUS

(57) A secondary battery includes a positive electrode plate, a negative electrode plate, a separator, and an electrolyte. The electrolyte includes a compound represented by formula I. $R_{11}$ and $R_{12}$ are each independently selected from halogen-substituted or unsubstituted $C_1$ to $C_6$ alkyl, at least one of $R_{11}$ or $R_{12}$ is substituted with halogen, and based on a mass of the electrolyte, a mass percentage of the compound represented by formula I is A%, where $30 \leq A \leq 80$. The separator includes a porous substrate layer and binding layers disposed on two surfaces of the porous substrate layer, the binding layer includes a polymer, a binding force between the separator and the positive electrode plate is $F_1$ N/m, where $10 \leq F_1 \leq 15$, and a binding force between the separator and the negative electrode plate is $F_2$ N/m, where $18 \leq F_2 \leq 25$.

EP 4 614 655 A1

## Description

### TECHNICAL FIELD

This application relates to the field of electrochemical technologies, and in particular, to a secondary battery and an electronic apparatus.

### BACKGROUND

Secondary batteries, such as lithium-ion batteries, are widely used in fields such as smartphones, wearable devices, consumer-grade drones, electric vehicles, and other fields due to their advantages such as high energy density, long cycle life, and no memory effect.

Usually, in order to reduce interfacial side reactions between electrolytes and positive electrode plates, and between electrolytes and negative electrode plates, separators with a high binding force are disposed between positive electrode plates and negative electrode plates. However, this reduces storage space of electrolytes, and therefore it is likely to cause cycling performance degradation due to insufficient electrolyte wetting.

### SUMMARY

This application is intended to provide a secondary battery and an electronic apparatus, so as to improve the cycling performance of the secondary battery. Specific technical solutions are as follows:

A first aspect of this application provides a secondary battery, including a positive electrode plate, a negative electrode plate, a separator, and an electrolyte, where the electrolyte includes a compound represented by formula I,

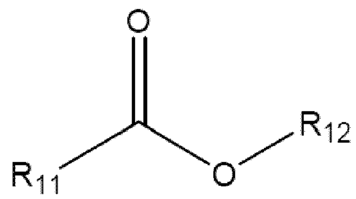

formula I

$R_{11}$ and $R_{12}$ are each independently selected from halogen-substituted or unsubstituted $C_1$ to $C_6$ alkyl, at least one of $R_{11}$ or $R_{12}$ is substituted with halogen, and based on a mass of the electrolyte, a mass percentage of the compound represented by formula I is A%, where $30 \leq A \leq 80$; and the separator includes a porous substrate layer and binding layers disposed on two surfaces of the porous substrate layer, the binding layer includes a polymer, a binding force between the separator and the positive electrode plate is $F_1$ N/m, where $10 \leq F_1 \leq 15$, and a binding force between the separator and the negative electrode plate is $F_2$ N/m, where $18 \leq F_2 \leq 25$. The separator of this application has a high binding force with the positive electrode plate and a high binding force with the negative electrode plate, reducing the storage space of the electrolyte. Therefore, it is likely to cause cycling performance degradation, high swelling rate during cycling, and the like due to electrolyte loss. The electrolyte including the compound represented by formula I and controlling the value of A within the above range can improve the oxidation resistance of the electrolyte to reduce interfacial side reactions between the positive electrode plate and the electrolyte and between the negative electrode plate and the electrolyte. This is conducive to reducing the consumption of the electrolyte and reducing the loss speed of the electrolyte, thereby improving the cycling performance of the secondary battery. In addition, the electrolyte including the compound represented by formula I and controlling the value of A within the above range can improve the interfacial stability between the positive electrode plate and the electrolyte, which is conducive to reducing the consumption of the electrolyte and reducing the loss speed of the electrolyte, and can also reduce oxygen release in a positive electrode active material, alleviating electrode plate swelling caused by accumulation of by-products generated from electrolyte decomposition during cycling of the electrolyte, thereby improving the cycling performance and swelling performance of the secondary battery.

In some embodiments of this application, the secondary battery meets at least one of the following characteristics: (1) at least one of $R_{11}$ or $R_{12}$ is substituted with F; and (2) $40 \leq A \leq 75$. The secondary battery meeting the above characteristic is more conducive to exerting the function of the compound represented by formula I, reducing the consumption of the electrolyte, and reducing the loss speed of the electrolyte. This is conducive to further improving the cycling performance and swelling performance of the secondary battery.

In some embodiments of this application, the compound represented by formula I includes at least one of the following compounds:

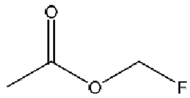 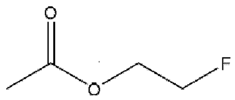 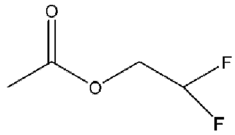 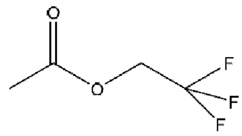

formula I-1 formula I-2 formula I-3 formula I-4

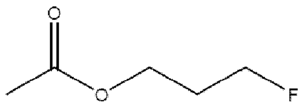 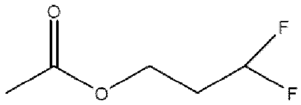 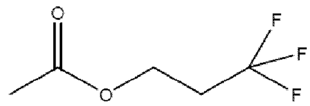

formula I-5 formula I-6 formula I-7

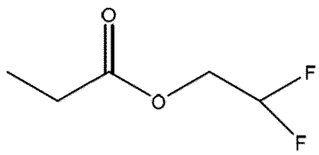 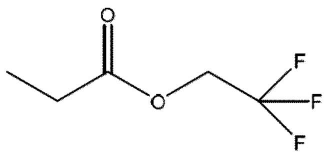 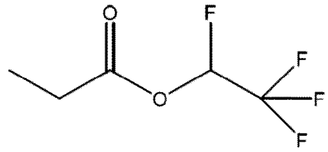

formula I-8 formula I-9 formula I-10

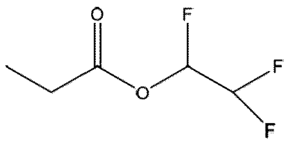 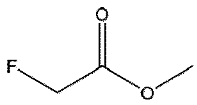 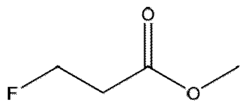 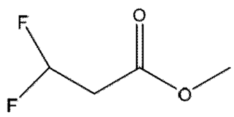

formula I-11 formula I-12 formula I-13 formula I-14

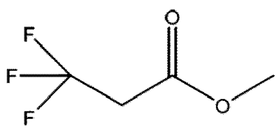 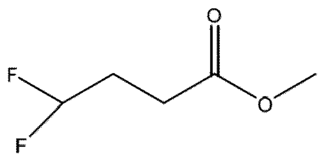 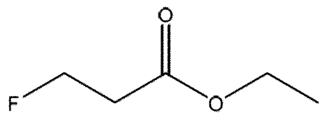

formula I-15 formula I-16 formula I-17

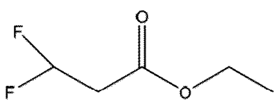 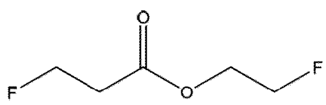 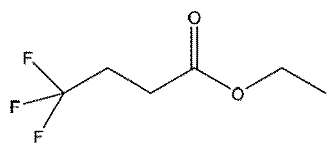

formula I-18 formula I-19 formula I-20.

The electrolyte including the compound represented by formula I within the above range can better exert the function of the compound represented by formula I, reduce the consumption of the electrolyte, and reduce the loss speed of the electrolyte. This is conducive to improving the cycling performance and swelling performance of the secondary battery.

In some embodiments of this application, the electrolyte further includes an unsubstituted carboxylic ester compound, and the unsubstituted carboxylic ester compound includes at least one of methyl formate, ethyl formate, methyl acetate, ethyl acetate, propyl acetate, methyl propionate, ethyl propionate, or propyl propionate; and based on the mass of the electrolyte, a mass percentage of the unsubstituted carboxylic ester compound is B%, where $10 \leq B \leq 50$. Further introducing the above unsubstituted carboxylic ester compound into the electrolyte and controlling its mass percentage B% within the above range are conducive to further reducing the viscosity of the electrolyte, thereby improving the wettability of the electrolyte to the positive electrode plate and the negative electrode plate. In a case that the electrolyte is locally lost, the electrolyte nearby can quickly replenish a lost part of the electrolyte, which is conducive to reducing the

consumption of the electrolyte and reducing the loss speed of the electrolyte, and therefore is conducive to improving the cycling performance and swelling performance of the secondary battery.

In some embodiments of this application, $1 \leq A/B \leq 7$. With the value of A/B controlled within the above range, the compound represented by formula I in the electrolyte can synergize with the unsubstituted carboxylic ester compound, which is conducive to reducing the viscosity of the electrolyte, thereby improving the wettability of the electrolyte to the positive electrode plate and the negative electrode plate. In a case that the electrolyte is locally lost, the electrolyte nearby can quickly replenish a lost part of the electrolyte, which is conducive to reducing the consumption of the electrolyte and reducing the loss speed of the electrolyte, and therefore is conducive to improving the cycling performance and swelling performance of the secondary battery.

In some embodiments of this application, the secondary battery meets at least one of the following characteristics: (1) an area proportion of an orthographic projection of the binding layer on a surface of the porous substrate layer is 15% to 85%; and (2) an average particle size of particles of the polymer is 0.2 μm to 2 μm. The secondary battery meeting the above characteristic can ensure a large binding force between the separator and the positive electrode plate and a large binding force between the separator and the negative electrode plate, which is conducive to improving the cycling performance and swelling performance of the secondary battery.

In some embodiments of this application, the secondary battery meets at least one of the following characteristics: (1) an area proportion of an orthographic projection of the binding layer on a surface of the porous substrate layer is 30% to 70%; (2) an average particle size of particles of the polymer is 0.3 μm to 1 μm; and (3) a weight-average molecular weight of the polymer is 300,000 to 3,000,000. The secondary battery meeting the above characteristic can better ensure a large binding force between the separator and the positive electrode plate and a large binding force between the separator and the negative electrode plate, which is conducive to further improving the cycling performance and swelling performance of the secondary battery.

In some embodiments of this application, the polymer includes a non-kernel-shell structure polymer or a kernel-shell structure polymer; the non-kernel-shell structure polymer includes at least one of polyvinylidene fluoride (PVDF), vinylidene fluoride-hexafluoropropylene (PVDF-HFP) copolymer, styrene-butadiene copolymer, polyacrylonitrile, butadiene-acrylonitrile copolymer, polyacrylic acid, polyacrylate, or acrylate-styrene copolymer; and a polymer of a kernel of the kernel-shell structure polymer includes at least one of polyvinylidene fluoride, polyacrylate, or acrylate-acrylonitrile copolymer, and a polymer of a shell of the kernel-shell structure polymer includes at least one of vinylidene fluoride-hexafluoropropylene copolymer, styrene-acrylate copolymer, or acrylate-acrylate copolymer. The polymer meeting the above characteristic can ensure a large binding force between the separator and the positive electrode plate and a large binding force between the separator and the negative electrode plate, which is conducive to improving the cycling performance and swelling performance of the secondary battery.

In some embodiments of this application, the electrolyte further includes ethylene carbonate and propylene carbonate, and based on the mass of the electrolyte, a mass percentage of ethylene carbonate is D% and a mass percentage of propylene carbonate is E%, where $0 \leq D+E \leq 10$, and $0 \leq D \leq 10$. Further introducing ethylene carbonate and/or propylene carbonate into the electrolyte and controlling the values of D+E and D within the above ranges can further improve the dissociation of a lithium salt by the compound represented by formula I, improve the conductivity of the electrolyte, and help to reduce the polarization of the secondary battery. This also facilitates film formation by lithium salt anions at the interface of the positive electrode or negative electrode, so as to form a positive electrode electrolyte interphase (CEI) film or a negative electrode solid electrolyte interphase (SEI) film rich in inorganic substances, enhancing the interfacial stability between the positive electrode plate and the electrolyte, and between the negative electrode plate and the electrolyte, thereby helping to improve the cycling performance and swelling performance of the secondary battery.

In some embodiments of this application, $0 \leq E \leq 10$. Controlling the value of E within the above range is conducive to the dissociation of a lithium salt in the electrolyte, improving the conductivity of the electrolyte, and helping to reduce the polarization of the secondary battery. This also facilitates film formation by lithium salt anions at the interface of the positive electrode or negative electrode, so as to form a CEI film or an SEI film rich in inorganic substances, enhancing the interfacial stability between the positive electrode plate and the electrolyte, and between the negative electrode plate and the electrolyte, thereby helping to improve the cycling performance and swelling performance of the secondary battery.

In some embodiments of this application, the electrolyte further includes fluorinated cyclic carbonate, and based on the mass of the electrolyte, a mass percentage of the fluorinated cyclic carbonate is F%, where $1 \leq F \leq 20$; and the fluorinated cyclic carbonate includes at least one of the following compounds:

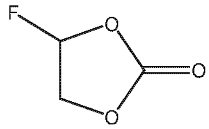 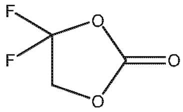 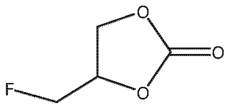 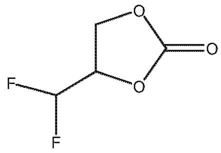

formula II-1 formula II-2 formula II-3 formula II-4

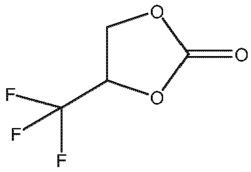 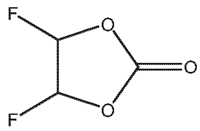 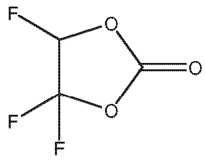 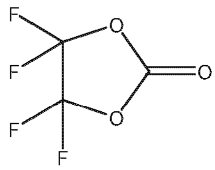

formula II-5 formula II-6 formula II-7 formula II-8

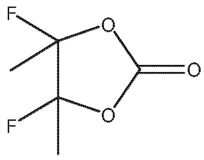 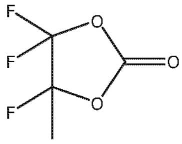 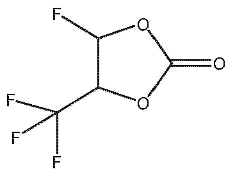 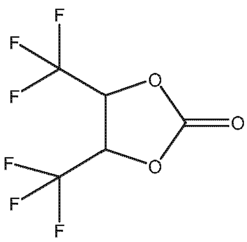

formula II-9 formula II-10 formula II-11 formula II-12.

Further introducing fluorinated cyclic carbonate into the electrolyte and controlling the value of F within the above range can allow for synergistic effects with the compound represented by formula I, enhancing the interfacial stability between the positive electrode plate and the electrolyte, and between the negative electrode plate and the electrolyte. This is conducive to reducing the consumption of the electrolyte and reducing the loss speed of the electrolyte, thereby improving the cycling performance and swelling performance of the secondary battery.

In some embodiments of this application, $3 \leq F \leq 10$. Controlling the value of F within the above range is more conducive to exerting the function of fluorinated cyclic carbonate, thereby helping to further improve the cycling performance and swelling performance of the secondary battery.

A second aspect of this application provides an electronic apparatus including the secondary battery provided in the first aspect of this application. The secondary battery provided in this application has good cycling performance and swelling performance, so that the electronic apparatus provided in this application has long service life and good performance.

This application has the following beneficial effects:

This application provides a secondary battery and an electronic apparatus. The secondary battery includes a positive electrode plate, a negative electrode plate, a separator, and an electrolyte. The electrolyte includes a compound represented by formula I. $R_{11}$ and $R_{12}$ are each independently selected from halogen-substituted or unsubstituted $C_1$ to $C_6$ alkyl, at least one of $R_{11}$ or $R_{12}$ is substituted with halogen, and based on a mass of the electrolyte, a mass percentage of the compound represented by formula I is A%, where $30 \leq A \leq 80$. The separator includes a porous substrate layer and binding layers disposed on two surfaces of the porous substrate layer, the binding layer includes a polymer, a binding force between the separator and the positive electrode plate is $F_1$ N/m, where $10 \leq F_1 \leq 15$, and a binding force between the separator and the negative electrode plate is $F_2$ N/m, where $18 \leq F_2 \leq 25$. The separator of this application has a high binding force with the positive electrode plate and a high binding force with the negative electrode plate. Therefore, it is likely to cause cycling performance degradation, high swelling rate during cycling, and the like due to electrolyte loss. The electrolyte including the compound represented by formula I and controlling the value of A within the above range can improve the oxidation resistance of the electrolyte to reduce interfacial side reactions between the positive electrode plate and the electrolyte and between the negative electrode plate and the electrolyte. This is conducive to reducing the consumption of the electrolyte and reducing the loss speed of the electrolyte, thereby improving the cycling performance of the secondary battery. In addition, the electrolyte including the compound represented by formula I and controlling the value of A within the above range can improve the interfacial stability between the positive electrode plate and the electrolyte, which is conducive to reducing the consumption of the electrolyte and reducing the loss speed of the electrolyte, and can also reduce oxygen release in a positive electrode active material, alleviating electrode plate swelling

caused by accumulation of by-products generated from electrolyte decomposition during cycling of the electrolyte, thereby improving the cycling performance and swelling performance of the secondary battery.

Certainly, when any one of the products or methods of this application is implemented, all the advantages described above are not necessarily achieved.

## DETAILED DESCRIPTION

The following clearly and completely describes the technical solutions in the embodiments of this application. Apparently, the described embodiments are only some rather than all of the embodiments of this application. All other embodiments obtained by skilled persons in the art based on this application shall fall within the protection scope of this application.

It should be noted that, in the following content, a lithium-ion battery is used as an example of a secondary battery to explain this application. However, the secondary battery in this application is not limited to the lithium-ion battery. Specific technical solutions are as follows:

A first aspect of this application provides a secondary battery, including a positive electrode plate, a negative electrode plate, a separator, and an electrolyte, where the electrolyte includes a compound represented by formula I,

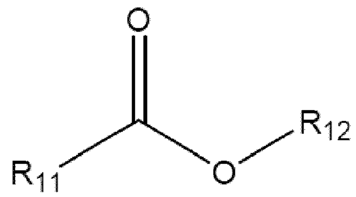

formula I

$R_{11}$ and $R_{12}$ are each independently selected from halogen-substituted or unsubstituted $C_1$ to $C_6$ alkyl, and at least one of $R_{11}$ or $R_{12}$ is substituted with halogen. The halogen includes F, Cl, Br, or I. Preferably, at least one of $R_{11}$ or $R_{12}$ is substituted with F. In some embodiments of this application, $R_{11}$ and $R_{12}$ are each independently selected from the following halogen-substituted or unsubstituted group: methyl, ethyl, or propyl. At least one of $R_{11}$ or $R_{12}$ is substituted with halogen. Based on a mass of the electrolyte, a mass percentage of the compound represented by formula I is A%, where $30 \leq A \leq 80$, preferably, $40 \leq A \leq 75$. For example, the value of A can be 30, 35, 40, 43, 46, 48, 50, 52, 55, 58, 60, 62, 64, 67, 70, 73, 75, 80, or in a range defined by any two of these values. The separator includes a porous substrate layer and binding layers disposed on two surfaces of the porous substrate layer, the binding layer includes a polymer, a binding force between the separator and the positive electrode plate is $F_1$ N/m, where $10 \leq F_1 \leq 15$, and a binding force between the separator and the negative electrode plate is $F_2$ N/m, where $18 \leq F_2 \leq 25$. For example, the value of $F_1$ can be 10, 11, 12, 13, 14, 15, or in a range defined by any two of these values. The value of $F_2$ can be 18, 19, 20, 21, 22, 23, 24, 25, or in a range defined by any two of these values.

The separator of this application has a high binding force with the positive electrode plate and a high binding force with the negative electrode plate, reducing the storage space of the electrolyte. Therefore, it is likely to cause cycling performance degradation, high swelling rate during cycling, and the like due to electrolyte loss. The electrolyte including the compound represented by formula I and controlling the value of A within the above range can improve the oxidation resistance of the electrolyte to reduce interfacial side reactions between the positive electrode plate and the electrolyte and between the negative electrode plate and the electrolyte. This is conducive to reducing the consumption of the electrolyte and reducing the loss speed of the electrolyte, thereby improving the cycling performance of the secondary battery. In addition, the electrolyte including the compound represented by formula I and controlling the value of A within the above range can improve the interfacial stability between the positive electrode plate and the electrolyte, which is conducive to reducing the consumption of the electrolyte and reducing the loss speed of the electrolyte, and can also reduce oxygen release in a positive electrode active material, alleviating electrode plate (including the positive electrode plate and the negative electrode plate) swelling caused by accumulation of by-products generated from electrolyte decomposition during cycling of the electrolyte, thereby improving the cycling performance and swelling performance of the secondary battery. When the value of $F_1$ is too small, for example, less than 10, the adhesion between the separator and the positive electrode plate is weak, and when the interface contact is weak, it is easy to produce a positive electrode "broken bridge" making the separator and the positive electrode plate no longer contact, affecting the ion transmission between the separator and the positive electrode plate; when the value of $F_2$ is too small, for example, less than 18, the adhesion between the separator and the negative electrode plate is weak, and when the interface contact is weak, it is easy to produce a negative electrode "broken bridge" making the separator and the negative electrode plate no longer contact, affecting the ion transmission between the separator and the negative electrode plate, so when the values of $F_1$ and/or $F_2$

are too small, it is not conducive to improving the cycling performance and swelling performance of the secondary battery. When the value of $F_1$ is too large, for example, greater than 15, the electrolyte is not sufficient to fully wet the positive electrode plate, and when the value of $F_2$ is too large, for example, greater than 25, the electrolyte is not sufficient to fully wet the negative electrode plate, so when the values of $F_1$ and/or $F_2$ are too large, it is also not conducive to improving the cycling performance and swelling performance of the secondary battery. When the value of A is too small, for example, less than 30, the mass percentage of the compound represented by formula I is too low, and its function is limited, the effect of reducing electrolyte consumption and reducing the loss speed of the electrolyte is weak, and it cannot improve the cycling performance and swelling performance of the secondary battery. When the value of A is too large, for example, greater than 80, the mass percentage of the compound represented by formula I is too high, and the viscosity of the electrolyte will increase sharply, resulting in an increase in concentration polarization of the secondary battery. This increases the impedance of the secondary battery, and thus is not conducive to improving the cycling performance and swelling performance of the secondary battery. Therefore, with the binding force $F_1$ between the separator and the positive electrode plate, and the binding force $F_2$ between the separator and the negative electrode plate controlled within the range of this application, and the compound represented by formula I added into the electrolyte, and the mass percentage A% of the compound represented by formula I controlled within the range of this application, the cycling performance and swelling performance of the secondary battery can be improved.

In some embodiments of this application, the compound represented by formula I includes at least one of the following compounds:

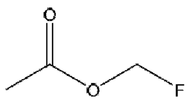
formula I-1

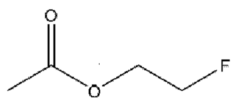
formula I-2

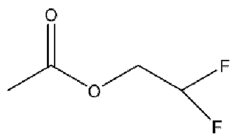
formula I-3

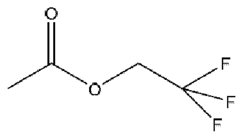
formula I-4

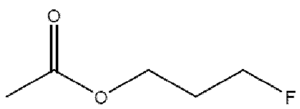
formula I-5

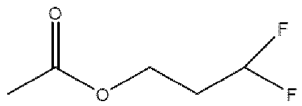
formula I-6

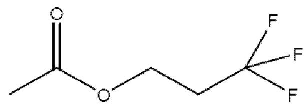
formula I-7

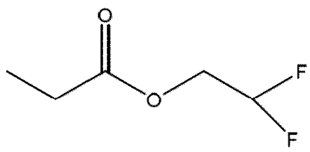
formula I-8

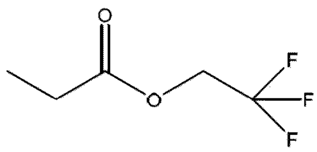
formula I-9

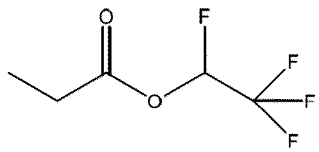
formula I-10

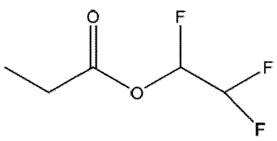
formula I-11

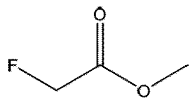
formula I-12

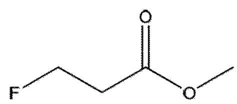
formula I-13

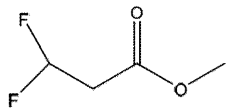
formula I-14

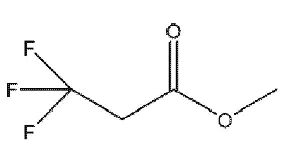
formula I-15

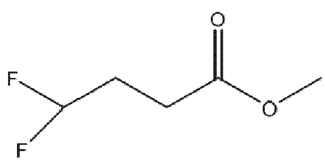
formula I-16

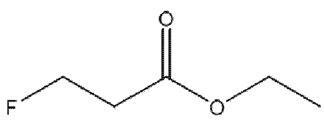
formula I-17

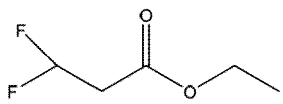
formula I-18

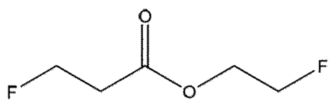
formula I-19

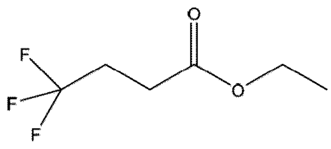
formula I-20.

The electrolyte including the compound represented by formula I within the above range can better exert the function of the compound represented by formula I, improve the oxidation resistance of the electrolyte, reduce interfacial side reactions between the positive electrode plate and the electrolyte, and between the negative electrode plate and the electrolyte, while also improving the interfacial stability between the positive electrode plate and the electrolyte, which is conducive to reducing the consumption of the electrolyte and reducing the loss speed of the electrolyte, reducing oxygen release in the positive electrode active material, alleviating the problem of electrode plate swelling caused by the accumulation of by-products generated from electrolyte decomposition during cycling, thereby improving the cycling performance and swelling performance of the secondary battery.

In some embodiments of this application, the electrolyte further includes an unsubstituted carboxylic ester compound, and the unsubstituted carboxylic ester compound includes at least one of methyl formate, ethyl formate, methyl acetate, ethyl acetate, propyl acetate, methyl propionate, ethyl propionate, or propyl propionate; and based on the mass of the electrolyte, a mass percentage of the unsubstituted carboxylic ester compound is B%, where $10 \leq B \leq 50$. For example, the value of B can be 10, 16, 20, 25, 30, 36, 40, 44, 50, or in a range defined by any two of these values. The viscosity of the compound represented by the formula I is large, and the unsubstituted carboxylic ester compound is similar in structure to the compound represented by the formula I, but has good affinity and small viscosity. Therefore, further introducing the above unsubstituted carboxylic ester compound into the electrolyte and controlling its mass percentage B% within the above range are conducive to further reducing the viscosity of the electrolyte, thereby improving the wettability of the electrolyte to the positive electrode plate and the negative electrode plate. In a case that the electrolyte is locally lost, the electrolyte nearby can quickly replenish a lost part of the electrolyte, which is conducive to reducing the consumption of the electrolyte and reducing the loss speed of the electrolyte, and therefore is conducive to improving the cycling performance and swelling performance of the secondary battery.

In some embodiments of this application, $1 \leq A/B \leq 7$. For example, the value of A/B can be 1, 1.4, 2, 2.5, 3, 3.6, 4, 4.4, 5, 5.3, 6, 6.5, 7, or in a range defined by any two of these values. With the value of A/B controlled within the above range, the compound represented by formula I in the electrolyte can synergize with the unsubstituted carboxylic ester compound, which is conducive to reducing the viscosity of the electrolyte, thereby improving the wettability of the electrolyte to the positive electrode plate and the negative electrode plate. In a case that the electrolyte is locally lost, the electrolyte nearby can quickly replenish a lost part of the electrolyte, which is conducive to reducing the consumption of the electrolyte and reducing the loss speed of the electrolyte, and therefore is conducive to improving the cycling performance and swelling performance of the secondary battery.

In some embodiments of this application, an area proportion of an orthographic projection of the binding layer on a surface of the porous substrate layer is 15% to 85%. Preferably, the area proportion of the orthographic projection of the binding layer on the surface of the porous substrate layer is 30% to 70%. For example, the area proportion of the orthographic projection of the binding layer on the surface of the porous substrate layer can be 15%, 20%, 30%, 35%, 40%, 44%, 50%, 56%, 60%, 65%, 70%, 80%, 85%, or in a range defined by any two of these values. Controlling the area proportion of the orthographic projection of the binding layer on the surface of the porous substrate layer within the above range can ensure a large binding force between the separator and the positive electrode plate and a large binding force between the separator and the negative electrode plate, which is conducive to improving the cycling performance and swelling performance of the secondary battery.

In some embodiments of this application, an average particle size of particles of the polymer is 0.2 μm to 2 μm. Preferably, the average particle size of the particles of the polymer is 0.3 μm to 1 μm. For example, the average particle size of the particles of the polymer can be 0.2 μm, 0.3 μm, 0.4 μm, 0.6 μm, 0.8 μm, 1.0 μm, 1.2 μm, 1.4 μm, 1.6 μm, 1.8 μm, 2 μm, or in a range defined by any two of these values. Controlling the average particle size of the particles of the polymer within the above range is conducive to the wetting of the particles of the polymer in the binding layer of the separator by the electrolyte, and ensures a large binding force between the separator and the positive electrode plate and a large binding force between the separator and the negative electrode plate, which is conducive to improving the cycling performance and swelling performance of the secondary battery.

Usually, particles of the polymer with different average particle sizes can be obtained by mechanical crushing (for example, ball milling). For example, the average particle size of particles of the polymer can be controlled by adjusting the ball milling time. When other conditions remain unchanged, the longer the ball milling time, the smaller the average particle size of the particles of the polymer; the shorter the ball milling time, the larger the average particle size of the particles of the

polymer.

In some embodiments of this application, the polymer includes a non-kernel-shell structure polymer. The non-kernel-shell structure polymer includes at least one of polyvinylidene fluoride, vinylidene fluoride-hexafluoropropylene copolymer, styrene-butadiene copolymer, polyacrylonitrile, butadiene-acrylonitrile copolymer, polyacrylic acid, polyacrylate, or acrylate-styrene copolymer; and Using the above type of polymer in the separator can ensure a large binding force between the separator and the positive electrode plate and a large binding force between the separator and the negative electrode plate, which is conducive to improving the cycling performance and swelling performance of the secondary battery.

In some embodiments of this application, the polymer includes a kernel-shell structure polymer. A polymer of a kernel of the kernel-shell structure polymer includes at least one of polyvinylidene fluoride, polyacrylate, or acrylate-acrylonitrile copolymer, and a polymer of a shell of the kernel-shell structure polymer includes at least one of vinylidene fluoride-hexafluoropropylene copolymer, styrene-acrylate copolymer, or acrylate-acrylate copolymer. This application does not particularly limit the mass ratio of the kernel to the shell of the kernel-shell structure polymer, as long as the purpose of this application can be achieved. For example, the mass ratio of the kernel to the shell can be 1:5 to 5:1. The above kernel-shell structure polymer, with the shell being a polymer with high binding force and the kernel being a polymer with high affinity for the electrolyte, ensures that the separator using the above types of polymers can improve the wettability of the separator by the electrolyte, while also reducing the risk of decreased binding force of the separator due to high swelling of the polymer in the electrolyte, ensuring a high binding force between the separator and the positive electrode plate and a high binding force between the separator and the negative electrode plate, thereby improving the cycling performance and swelling performance of the secondary battery.

In some embodiments of this application, a weight-average molecular weight of the polymer is 300,000 to 3,000,000. For example, the weight-average molecular weight of the polymer can be 300,000, 500,000, 1,000,000, 1,400,000, 1,500,000, 1,700,000, 2,000,000, 2,300,000, 2,500,000, 2,600,000, 3,000,000, or in a range defined by any two of these values. Controlling the weight-average molecular weight of the polymer in the separator within the above range can control the swelling degree of the polymer in the separator in the electrolyte within an appropriate range, ensuring a high binding force between the separator and the positive electrode plate and a high binding force between the separator and the negative electrode plate, thereby improving the cycling performance and swelling performance of the secondary battery. In this application, polymers with different weight-average molecular weights can be obtained directly by purchase.

In this application, the binding layer further includes a dispersant. Based on the mass of the binding layer, the mass percentage of the polymer can be 85% to 99.5%, and the mass percentage of the dispersant can be 0.5% to 15%. In this application, the type of dispersant is not particularly limited, as long as the purpose of this application can be achieved. For example, the dispersant can include but is not limited to at least one of sodium carboxymethyl cellulose or fluoroether ($F_2O$).

In this application, the binding layer on the side of the separator close to the positive electrode plate is defined as the first binding layer, and the binding layer on the side of the separator close to the negative electrode plate is defined as the second binding layer. The coating surface density of the first binding layer and the second binding layer can each independently be 0.01 mg/cm$^2$ to 0.2 mg/cm$^2$. The thickness of the first binding layer and the second binding layer can each independently be 0.01 $\mu$m to 1 $\mu$m. This application does not particularly limit the method for preparing the above binding layers, as long as the purpose of this application can be achieved. For example, the binding layer can be prepared by screen printing. This application does not particularly limit the process parameters for preparing the above binding layer. Persons skilled in the art can select them as needed, as long as the purpose of this application can be achieved.

Usually, $F_1$ and $F_2$ can be controlled by adjusting the coating surface density and thickness of the first binding layer and the second binding layer of the separator. For example, when other conditions remain unchanged, an increase in the coating surface density of the first binding layer increases $F_1$; and a decrease in the coating surface density of the first binding layer decreases $F_1$. When other conditions remain unchanged, an increase in the thickness of the first binding layer increases Fi; and a decrease in the thickness of the first binding layer decreases $F_1$. For example, when other conditions remain unchanged, an increase in the coating surface density of the second binding layer increases $F_2$; and a decrease in the coating surface density of the second binding layer decreases $F_2$. When other conditions remain unchanged, an increase in the thickness of the second binding layer increases $F_2$; and a decrease in the thickness of the second binding layer decreases $F_2$.

Usually, the area proportion of the orthographic projection of the binding layer on the surface of the porous substrate layer can be controlled by changing the coating amount of the binding layer to change the coating area of the binding layer. When other conditions remain unchanged, an increase in the coating amount of the binding layer increases the coating area of the binding layer, and the area proportion of the orthographic projection of the binding layer on the surface of the porous substrate layer increases. A decrease in the coating amount of the binding layer decreases the coating area of the binding layer, and the area proportion of the orthographic projection of the binding layer on the surface of the porous substrate layer decreases. In this application, the area proportion of the orthographic projection of the first

binding layer and the second binding layer on the surface of the porous substrate layer is the same, which is the area proportion of the orthographic projection of the binding layer on the surface of the porous substrate layer.

In some embodiments, the separator further includes a heat-resistant layer, and the heat-resistant layer is disposed between the porous substrate layer and the binding layer. In some embodiments, the heat-resistant layer is disposed on one side of the porous substrate layer. In other embodiments, the heat-resistant layer is disposed on two sides of the porous substrate layer. This application does not particularly limit the coating surface density of the heat-resistant layer, as long as the purpose of this application can be achieved. For example, the coating surface density of the heat-resistant layer can be 0.1 $mg/cm^2$ to 0.7 $mg/cm^2$. This application does not particularly limit the thickness of the heat-resistant layer, as long as the purpose of this application can be achieved. For example, the thickness of the heat-resistant layer can be 0.5 $\mu$m to 4 $\mu$m. This application does not particularly limit the method for preparing the heat-resistant layer, as long as the purpose of this application can be achieved. For example, the heat-resistant layer can be prepared by transfer coating. This application does not particularly limit the process parameters for preparing the heat-resistant layer. Persons skilled in the art can select them as needed, as long as the purpose of this application can be achieved.

In some embodiments, the heat-resistant layer includes ceramic particles and a heat-resistant layer binder. This application does not particularly limit the mass percentage of ceramic particles and the heat-resistant layer binder in the heat-resistant layer, as long as the purpose of this application can be achieved. For example, based on the mass of the heat-resistant layer, the mass percentage of ceramic particles can be 60% to 90%, and the mass percentage of the heat-resistant layer binder can be 10% to 40%. This application does not particularly limit the types of ceramic particles and the heat-resistant layer binder, as long as the purpose of this application can be achieved. For example, the ceramic particles can include but are not limited to at least one of $Al_2O_3$, boehmite, $TiO_2$, ZnO, or MgO. The heat-resistant layer binder can include but is not limited to at least one of polyimide and its derivatives, aromatic nylon and its modifications, phenolic resin, or polytetrafluoroethylene.

This application does not particularly limit the porous substrate layer of the separator, as long as the purpose of this application can be achieved. For example, the material of the porous substrate layer can include but is not limited to at least one of polyethylene, polypropylene, polytetrafluoroethylene-based polyolefin membranes, polyester membranes (for example, polyethylene terephthalate (PET) membranes), cellulose membranes, polyimide membranes, polyamide membranes, spandex or aramid membranes. The type of the porous substrate layer can include but is not limited to at least one of woven membranes, non-woven membranes (non-woven fabrics), microporous membranes, composite membranes, calendered membranes, or spun membranes. In this application, the thickness of the porous substrate layer is not particularly limited, as long as the purpose of this application can be achieved. For example, the thickness of the porous substrate layer can be 3 $\mu$m to 30 $\mu$m. In this application, the pore size of the porous substrate layer is not particularly limited, as long as the purpose of this application can be achieved. For example, the pore size can be 0.01 $\mu$m to 1 $\mu$m.

In some embodiments of this application, the electrolyte further includes ethylene carbonate and propylene carbonate, and based on the mass of the electrolyte, a mass percentage of ethylene carbonate is D% and a mass percentage of propylene carbonate is E%, where $0 \leq D+E \leq 10$, and $0 \leq D \leq 10$. For example, the value of D+E can be 0, 1, 2, 3, 4, 5, 6, 7, 8, 9, 10, or in a range defined by any two of these values. The value of D can be 0, 1, 2, 3, 4, 5, 6, 7, 8, 9, 10, or in a range defined by any two of these values. Further introducing ethylene carbonate and/or propylene carbonate into the electrolyte of the compound represented by formula I and controlling the values of D+E and D within the above ranges can further improve the dissociation of a lithium salt by the compound represented by formula I, improve the conductivity of the electrolyte, and help to reduce the polarization of the secondary battery. This also facilitates film formation by lithium salt anions (for example, $PF_6^-$) at the interface of the positive electrode or negative electrode, so as to form a CEI film or an SEI film rich in inorganic substances, enhancing the interfacial stability between the positive electrode plate and the electrolyte, and between the negative electrode plate and the electrolyte, thereby helping to improve the cycling performance and swelling performance of the secondary battery.

In some embodiments of this application, $0 \leq E \leq 10$. For example, the value of E can be 0, 1, 2, 3, 4, 5, 6, 7, 8, 9, 10, or in a range defined by any two of these values. Controlling the value of E within the above range is conducive to the dissociation of a lithium salt in the electrolyte, improving the conductivity of the electrolyte, and helping to reduce the polarization of the secondary battery. This also facilitates film formation by lithium salt anions at the interface of the positive electrode or negative electrode, so as to form a CEI film or an SEI film rich in inorganic substances, enhancing the interfacial stability between the positive electrode plate and the electrolyte, and between the negative electrode plate and the electrolyte, thereby helping to improve the cycling performance and swelling performance of the secondary battery.

In some embodiments of this application, the electrolyte further includes fluorinated cyclic carbonate, and based on the mass of the electrolyte, a mass percentage of fluorinated cyclic carbonate is F%, where $1 \leq F \leq 20$, preferably, $3 \leq F \leq 10$. For example, the value of F can be 1, 3, 5, 7, 10, 12, 15, 18, 20, or in a range defined by any two of these values. The fluorinated cyclic carbonate includes at least one of the following compounds:

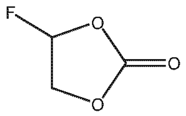
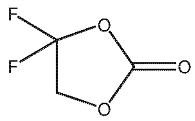
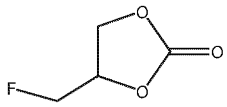
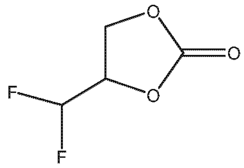

formula II-1 formula II-2 formula II-3 formula II-4

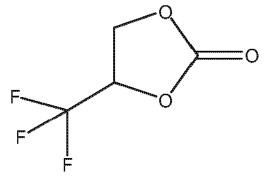
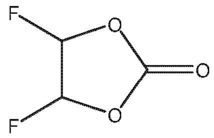
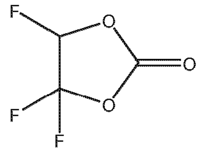
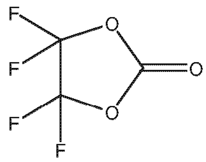

formula II-5 formula II-6 formula II-7 formula II-8

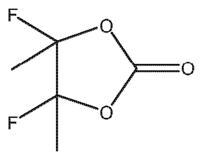
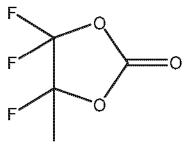
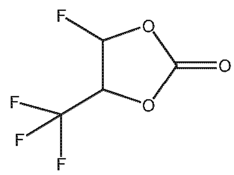
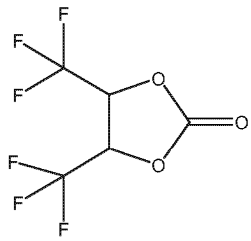

formula II-9 formula II-10 formula II-11 formula II-12.

The compound represented by formula I in the electrolyte can improve the interfacial stability between the positive electrode plate and the electrolyte. The reduction potential of the fluorinated cyclic carbonate is high, allowing for preferential film formation at the interface of the negative electrode to protect the interface of the negative electrode by reducing side reactions between the negative electrode plate and the electrolyte. This improves the interfacial stability between the negative electrode plate and the electrolyte. Further introducing fluorinated cyclic carbonate into the electrolyte and controlling the value of F within the above range can allow for synergistic effects with the compound represented by formula I, enhancing the interfacial stability between the positive electrode plate and the electrolyte, and between the negative electrode plate and the electrolyte. This is conducive to reducing the consumption of the electrolyte and reducing the loss speed of the electrolyte, thereby improving the cycling performance and swelling performance of the secondary battery.

In this application, the electrolyte further includes another organic solvent. This application does not particularly limit the type of the another organic solvent, as long as the objectives of this application can be achieved. For example, the other organic solvents can include but are not limited to at least one of dimethyl carbonate (DMC), diethyl carbonate (DEC), dipropyl carbonate (DPC), methyl propyl carbonate (MPC), ethyl propyl carbonate (EPC), methyl ethyl carbonate (MEC), butylene carbonate (BC), vinyl ethylene carbonate (VEC), γ-butyrolactone, decalactone, valerolactone, caprolactone, dibutyl ether, tetraglyme, diglyme, 1,2-dimethoxyethane, 1,2-diethoxyethane, 1-ethoxy-1-methoxyethane, 2-methyltetrahydrofuran, tetrahydrofuran, dimethyl sulfoxide, 1,2-dioxolane, butane sultone, methyl butane sultone, 1,3-dimethyl-2-imidazolidinone, N-methyl-2-pyrrolidone, dimethylformamide, trimethyl phosphate, triethyl phosphate, or trioctyl phosphate. Based on the mass of the electrolyte, the mass percentage of the another organic solvent is G%, where $0 \leq G \leq 50$. For example, the value of G can be 0, 10, 15, 20, 23, 25, 30, 37, 35, 40, 45, 50, or in a range defined by any two of these values.

In this application, the electrolyte further includes a lithium salt. This application does not particularly limit the types of lithium salts, as long as the purpose of this application can be achieved. For example, the lithium salt can include but is not limited to at least one of lithium hexafluorophosphate, lithium bis(trifluoromethanesulfonyl)imide, lithium bis(fluorosulfonyl)imide, lithium tetrafluoroborate, lithium bis(oxalato)borate, lithium difluoro(oxalato)borate, or lithium difluorophosphate. Preferably, the lithium salt includes lithium hexafluorophosphate. Based on the mass of the electrolyte, the mass percentage of the lithium salt is H%, where $8 \leq H \leq 20$. For example, the value of H can be 8, 10, 12, 12.5, 14, 15, 18, 20, or in a range defined by any two of these values.

In some embodiments of this application, the electrolyte can include lithium salt, the compound represented by formula I, and another organic solvent. The mass percentages of the lithium salt, the compound represented by formula I,

and another organic solvent are as described above. The secondary battery including the above electrolyte has good cycling performance and swelling performance.

In some embodiments of this application, the electrolyte can include lithium salt, the compound represented by formula I, optionally, the electrolyte further includes at least one of other organic solvents, unsubstituted carboxylic ester compounds, ethylene carbonate, propylene carbonate, or fluorinated cyclic carbonate. The mass percentages of the lithium salt, the compound represented by formula I, unsubstituted carboxylic ester compounds, ethylene carbonate, propylene carbonate, fluorinated cyclic carbonate, and other organic solvents are as described above. The secondary battery including the above electrolyte has good cycling performance and swelling performance.

This application does not particularly limit the positive electrode plate, as long as the purpose of this application can be achieved. For example, the positive electrode plate includes a positive electrode current collector and a positive electrode material layer disposed on at least one surface of the positive electrode current collector. In this application, a positive electrode material layer may be provided on one or two surfaces of the positive electrode current collector in a thickness direction of the positive electrode current collector. It should be noted that the "surface" herein may be an entire region or a partial region of the positive electrode current collector. This is not particularly limited in this application, provided that the objectives of this application can be achieved.

This application does not particularly limit the positive electrode current collector, as long as the objectives of this application can be achieved. For example, it can include but is not limited to aluminum foil, aluminum alloy foil, or composite current collectors (for example, aluminum-carbon composite current collectors). The thicknesses of the positive electrode current collector and the positive electrode material layer are not particularly limited in this application, as long as the purpose of this application can be achieved. For example, the thickness of the positive electrode current collector is 6 $\mu$m to 12 $\mu$m, and the thickness of the positive electrode material layer is 30 $\mu$m to 120 $\mu$m. The thickness of the positive electrode plate is not particularly limited in this application, provided that the purpose of this application can be achieved. For example, the thickness of the positive electrode plate is 50 $\mu$m to 250 $\mu$m.

The positive electrode material layer of this application includes a positive electrode active material, and the positive electrode active material includes substances that can reversibly intercalate and deintercalate active ions such as lithium ions. The positive electrode material layer can be one layer or multiple layers, and each layer in the multiple layers of the positive electrode material layer can contain the same or different positive electrode active materials. This application does not particularly limit the positive electrode active material, as long as the purpose of this application can be achieved. For example, the positive electrode active material can include but is not limited to at least one of lithium nickel cobalt manganese oxide (for example, NCM811, NCM622, NCM523, NCM111), lithium nickel cobalt aluminum oxide, lithium iron phosphate, lithium-rich manganese-based materials, lithium cobalt oxide ($LiCoO_2$), lithium manganese oxide, lithium manganese iron phosphate, or lithium titanate. The chemical formula of the above lithium-rich manganese-based material is $\gamma Li_2MnO_3 \cdot (1-\gamma)LiGO_2$, where $0 < \gamma < 1$, and G is a transition metal such as nickel, cobalt, or iron.

The positive electrode material layer can also include a positive electrode conductive agent and a positive electrode binder. This application does not particularly limit the types of the positive electrode conductive agent and the positive electrode binder, as long as the purpose of this application can be achieved. For example, the positive electrode binder can include but is not limited to at least one of polyvinyl alcohol, hydroxypropyl cellulose, diacetyl cellulose, polyvinyl chloride, carboxylated polyvinyl chloride, polyvinyl fluoride, ethylene oxide-containing polymers, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, or nylon; the positive electrode conductive agent can include but is not limited to at least one of carbon-based materials, metal-based materials, or conductive polymers. For example, the carbon-based materials can include at least one of natural graphite, artificial graphite, conductive carbon black (Super P), or carbon fiber; the metal-based materials can include but are not limited to at least one of metal powder, metal fiber, copper, nickel, aluminum, or silver; the conductive polymers can include but are not limited to polyphenylene derivatives. The mass ratio of the positive electrode active material, the positive electrode conductive agent, and the positive electrode binder in the positive electrode material layer is not particularly limited in this application, and can be selected as needed, as long as the purpose of this application can be achieved.

This application does not particularly limit the negative electrode plate, as long as the purpose of this application can be achieved. For example, the negative electrode plate includes a negative electrode current collector and a negative electrode material layer disposed on at least one surface of the negative electrode current collector. In this application, the negative electrode material layer may be provided on one or two surfaces of the negative electrode current collector in a thickness direction of the negative electrode current collector. It should be noted that the "surface" herein may be an entire region of the negative electrode current collector, or may be a partial region of the negative electrode current collector. This is not particularly limited in this application, provided that the objectives of this application can be achieved.

The negative electrode current collector is not particularly limited in this application, provided that the objectives of this application can be achieved. For example, it can include but is not limited to copper foil, copper alloy foil, nickel foil, stainless steel foil, titanium foil, nickel foam, copper foam, composite current collector (such as carbon-copper composite current collector, nickel-copper composite current collector, or titanium-copper composite current collector), or the like. In

this application, thicknesses of the negative electrode current collector and the negative electrode material layer are not particularly limited, provided that the purpose of this application can be achieved. For example, the thickness of the negative electrode current collector is 6 μm to 12 μm, and the thickness of the negative electrode material layer is 30 μm to 150 μm. The thickness of the negative electrode plate in this application is not particularly limited, provided that the purpose of this application can be achieved. For example, the thickness of the negative electrode plate is 50 μm to 350 μm.

The negative electrode material layer of this application includes a negative electrode active material, and the negative electrode material layer can be one layer or multiple layers, and each layer in the multiple layers of the negative electrode material layer can contain the same or different negative electrode active materials. The negative electrode active material is any substance that can reversibly intercalate and deintercalate active ions such as lithium ions. The negative electrode active material may include but is not limited to at least one of graphite, a mesocarbon microbead (MCMB), hard carbon, soft carbon, silicon, a silicon-carbon composite, $SiO_x$ ($0.5 < x < 1.6$), a Li-Sn alloy, a Li-Sn-O alloy, Sn, SnO, $SnO_2$, spinel-structure lithium titanate $TiO_2$-$Li_4Ti_5O_{12}$, a Li-Al alloy, lithium metal, and the like.

The negative electrode material layer in this application can also include a negative electrode binder and a negative electrode conductive agent, or the negative electrode material layer can also include a negative electrode binder, a negative electrode conductive agent, or a thickener. This application does not particularly limit the types of the negative electrode binder and the negative electrode conductive agent, as long as the purpose of this application can be achieved. For example, the negative electrode binder can include but is not limited to at least one of the above-mentioned positive electrode binders, and the negative electrode conductive agent can include but is not limited to at least one of the above-mentioned positive electrode conductive agents. This application does not particularly limit the types of thickeners, as long as the purpose of this application can be achieved. For example, the thickener can include but is not limited to at least one of sodium carboxymethyl cellulose or carboxymethyl cellulose. This application does not particularly limit the mass ratio of the negative electrode active material, the negative electrode conductive agent, the negative electrode binder, and the thickener in the negative electrode material layer, and they can be selected as needed, as long as the purpose of this application can be achieved.

The secondary battery of this application further includes a packaging bag for accommodating the positive electrode plate, the separator, the negative electrode plate, and the electrolyte, as well as other components known in the art for secondary batteries. This application does not particularly limit the above other components. This application does not particularly limit the packaging bag, which can be a well-known packaging bag in the art, as long as the objectives of this application can be achieved. For example, an aluminum-plastic film packaging bag may be used.

This application does not particularly limit the types of secondary batteries, and it can include any device that undergoes electrochemical reactions. For example, the secondary battery can include but is not limited to lithium metal secondary battery, lithium-ion secondary battery (lithium-ion battery), sodium-ion secondary battery (sodium-ion battery), lithium polymer secondary battery, and lithium-ion polymer secondary battery.

A preparation process of the secondary battery is well known to persons skilled in the art, and is not particularly limited in this application. For example, the preparation process may include but is not limited to the following steps: a separator, a positive electrode plate, a separator, and a negative electrode plate are stacked in sequence and subjected to operations such as winding and folding as needed to obtain an electrode assembly with a winding structure, the electrode assembly is put into a packaging bag, and the packaging bag is injected with an electrolyte and sealed to obtain a secondary battery; or a separator, a positive electrode plate, a separator, and a negative electrode plate are stacked in sequence, four corners of the entire laminated structure are fixed with tapes to obtain an electrode assembly with a laminated structure, the electrode assembly is put into a packaging bag, and the packaging bag is injected with an electrolyte and sealed to obtain a secondary battery. In addition, if necessary, an overcurrent prevention element, a guide plate, and the like may be placed in the packaging bag to prevent pressure increase, overcharge, and discharge in the secondary battery.

A second aspect of this application provides an electronic apparatus including the secondary battery provided in the first aspect of this application. The secondary battery provided in this application has good cycling performance and swelling performance, so that the electronic apparatus provided in this application has long service life and good performance.

The electronic apparatus in this application is not particularly limited, and may be any known electronic apparatus used in the prior art. For example, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

Examples

The following describes the embodiments of this application more specifically by using examples and comparative examples. Various tests and evaluations are performed in the following methods. In addition, unless otherwise specified, "part" and "%" are based on weight.

Test method and device

Test for area proportion of orthographic projection of binding layer on surface of porous substrate layer

The area proportion of the orthographic projection of the binding layer on the surface of the porous substrate layer can be obtained by testing the ratio of integral areas of the characteristic peaks of the porous substrate layer of the separator before and after application of the binding layer by using a reflection-type infrared spectrometer (Nicolet iS10). Area proportion of orthographic projection of binding layer on surface of porous substrate layer = 100% - (integral area of characteristic peaks of porous substrate layer after application of binding layer/integral area of characteristic peaks of porous substrate layer before application of binding layer) × 100%. When the heat-resistant layer is disposed between the porous substrate layer and the binding layer of the separator, the integral area of the characteristic peaks of the porous substrate layer refers to the integral area of the characteristic peaks of the porous substrate layer after application of the heat-resistant layer.

Test for average particle size of particles of polymer

The lithium-ion batteries of each example and comparative example were discharged to 3 V at 0.5C, and disassembled to obtain separators. The separators were cleaned with dimethyl carbonate (DMC), and dried at 60°C. Then, the surface of the separator perpendicular to the thickness direction was observed using a scanning electron microscope (SEM) at a magnification of 5000× of the SEM, and the observation region was 11.5 μm × 7.5 μm. 16 particles of the polymer were selected in this region to test the circumscribed circle diameter of the particles of the polymer. The average value of the circumscribed circle diameters of the 16 particles of the polymer was calculated as the average particle size of the particles of the polymer.

Test for binding force $F_1$ between separator and positive electrode plate

The binding force $F_1$ between the separator and the positive electrode plate was measured through a 180° peeling test. The lithium-ion batteries of the tested examples and comparative examples were discharged and disassembled. The negative electrode plates were peeled off. The separators and the positive electrode plates were soaked in dimethyl ether for 20 min to remove the electrolyte. Then, the separators and the positive electrode plates were cut into 54.2 mm × 72.5 mm samples. The separators and the positive electrode plates were composited through hot press by using a hot press machine under the conditions of 85°C and 1 MPa for 85s. The composited samples were cut into 15 mm × 54.2 mm strips to obtain test sample strips for testing the binding force $F_1$ between the separators and the positive electrode plates. A 15 mm × 55 mm double-sided tape (NITTO.NO5000NS) was attached to a steel plate. Then, the test sample strip was attached to the double-sided tape with the test surface facing down. A 15 mm × 70 mm paper tape was connected to one end of the test sample strip through a double-sided tape, and a 2 kg rod was manually pushed to roll on the test sample strip for 8 times to obtain the test sample. A tensile testing machine was used for testing. The test sample was fixed on the test bench. The paper tape was folded upwards by 180°, and fixed with clamps. Then the tensile testing machine started pulling the paper tape at a speed of 50 mm/min until the separator and the positive electrode plate on the surface of the double-sided tape were separated. The test data was saved. The binding force $F_1$ between the separator and the positive electrode plate was calculated based on the tensile force and the displacement during the separation of the separator and the positive electrode plate, measured in N/m.

Test for binding force $F_2$ between separator and negative electrode plate

The binding force $F_2$ between the separator and the negative electrode plate was measured through a 180° peeling test. The lithium-ion batteries of the tested examples and comparative examples were discharged and disassembled. The positive electrode plates were peeled off. The separators and the negative electrode plates were soaked in dimethyl ether for 20 min to remove the electrolyte. Then, the separators and the negative electrode plates were cut into 54.2 mm × 72.5 mm samples. The separators and the negative electrode plates were composited through hot press by using a hot press machine under the conditions of 85°C and 1 MPa for 85s. The composited samples were cut into 15 mm × 54.2 mm strips to obtain test sample strips for testing the binding force $F_2$ between the separators and the negative

electrode plates. Then, the binding force $F_2$ between the separator and the negative electrode plate was measured according to the above process for testing the binding force between the separator and the positive electrode plate, measured in N/m.

Cycling performance test

In a constant temperature environment of 25°C, the lithium-ion battery was charged at a constant current of 1C to 4.48 V, then charged at a constant voltage of 4.48 V to 0.05C, and then discharged at a constant current of 1C to 3.0 V. This was one charge-discharge cycle and the first cycle. The discharge capacity of the first cycle was recorded. The lithium-ion battery was charged and discharged by using the foregoing method, a discharge capacity for each cycle was recorded until the discharge capacity of the lithium-ion battery degraded to 80% of a discharge capacity for the first cycle, and the number of charge and discharge cycles was recorded as the number of cycles at 25°C.

Swelling performance test

In a constant temperature environment of 25°C, the lithium-ion battery was charged at a constant current of 1C to 4.48 V, then charged at a constant voltage of 4.48 V to 0.05C, and then discharged at a constant current of 1C to 3.0 V. This was one charge-discharge cycle. The thickness of the lithium-ion battery was tested at this time, and recorded as the initial thickness of the lithium-ion battery. After the lithium-ion battery was subjected to 1000 cycles according to the above charge-discharge method, the thickness of the lithium-ion battery was tested at this time, and recorded as the thickness of the lithium-ion battery after the 1000th cycle. The cycling swelling rate at 25°C was calculated using the following formula: cycling swelling rate at 25°C = (thickness of lithium-ion battery after the 1000th cycle/initial thickness of lithium-ion battery - 1) × 100%.

Example 1-1

<Preparation of electrolyte>

In an argon atmosphere glove box with a water content of less than 10 ppm, another organic solvent diethyl carbonate (DEC) was used as the base solvent. Then, a lithium salt lithium hexafluorophosphate ($LiPF_6$) and formula I-3 of the compound represented by formula I were added to the base solvent. They were mixed to uniformity to obtain an electrolyte. Based on the mass of the electrolyte, the mass percentage of the lithium salt $LiPF_6$ was 10%, the mass percentage A% of formula I-3 of the compound represented by formula I was 50%, and the base solvent accounted for the rest.

<Preparation of separator>

(1) The porous substrate layer was a 9 μm thick polypropylene film (from Celgard).

(2) Preparation of heat-resistant layer gel solution: Ceramic particles of aluminum oxide, a heat-resistant layer binder styrene-butadiene polymer (with a weight-average molecular weight Mw of $7\times10^6$), and a solvent deionized water were mixed in a mass ratio of 35:10:55. Specifically, first, a total of 30 kg of styrene-butadiene polymer and deionized water was added into a 60 L double planetary mixer, and dispersed at 45°C for 3 hours. Then, 16.1 kg of aluminum oxide ceramic powder was added into the mixer, and dispersed at 45°C with a rotation speed of 500 rpm for 2 hours. Then, a nano grinder was used for ball milling, with a time of 1.5 hours, and the grinding medium being spherical zirconia beads with a diameter of 6 μm, to obtain a heat-resistant coating gel solution.

(3) Preparation of heat-resistant layer: Surface coating was performed on the porous substrate layer in a manner of transfer coating, to form a structure with heat-resistant layers on two surfaces, where the coating surface density of the heat-resistant layers on the two surfaces remained consistent. Specifically, the coating speed of the heat-resistant layer was 6 m/min, and the single-surface coating surface density was 0.23 mg/cm$^2$. After the coating was completed, drying was performed in three stages, with each oven section being 3 m long and the oven temperatures set to 50°C, 60°C, and 60°C. After drying, the thicknesses of the heat-resistant layers on the two surfaces were both 0.7 μm.

(4) Preparation of binding layer gel solution: polymer powder, a solvent deionized water, and a dispersant fluoroether $F_2O$ were mixed in a mass ratio of 5:94.5:0.5, and added to a double planetary mixer. They were mixed at 45°C for 1 hour to obtain a binding layer gel solution with a solid content of 5.5 wt%. The polymer was a kernel-shell structure polymer, with the kernel being PVDF and the shell being vinylidene fluoride-hexafluoropropylene copolymer (PVDF-HFP), and denoted as PVDF@PVDF-HFP. The electrolyte swelling degree of the polymer was 150%, and the average

particle size and weight-average molecular weight of the particles are shown in Table 4.

(5) Preparation of binding layer: Surface coating was performed on the separator obtained in (3) with the heat-resistant layers on the two surfaces in a manner of screen printing to form a separator with a first binding layer and a second binding layer on the surface. The coating surface density of the first binding layer and the second binding layer remained consistent. Specifically, the coating speed of the first binding layer and the second binding layer was 4 m/min, and the coating surface density was 0.03 mg/cm$^2$. The area proportions of the orthographic projections of the first binding layer and the second binding layer on the surface of the porous substrate layer were the same, which was the area proportion of the orthographic projection of the binding layer on the surface of the porous substrate layer, as shown in Table 4. Drying was performed in three stages, with each oven section being 3 m long and the oven temperatures set to 50°C, 60°C, and 60°C. After drying, the thickness of the first binding layer was 0.3 $\mu$m, and the thickness of the second binding layer was 0.3 $\mu$m.

<Preparation of positive electrode plate>

A positive electrode active material $LiCoO_2$, a positive electrode conductive agent conductive carbon black (Super P), and a positive electrode binder polyvinylidene fluoride (PVDF, with Mw=7$\times 10^6$) were mixed in a mass ratio of 97.5:1:1.5, with N-methyl-2-pyrrolidone (NMP) added as a solvent. They were stirred to uniformity in a vacuum mixer to obtain a positive electrode slurry with a solid content of 75 wt%. The positive electrode slurry was evenly applied on one surface of a positive electrode current collector aluminum foil with a thickness of 10 $\mu$m, dried at 85°C, and cold pressed to obtain a positive electrode plate with a positive electrode material layer with a single-surface coating thickness of 50 $\mu$m. Then, the foregoing steps were repeated on the other surface of the aluminum foil to obtain a positive electrode plate coated with positive electrode material layers on two surfaces. Then cutting and welding of positive electrode tab: aluminum tab were performed to obtain a positive electrode plate with dimensions of 74 mm $\times$ 851 mm for later use. The compacted density of the positive electrode material layer was 4.15 g/cm$^3$.

<Preparation of negative electrode plate>

A negative electrode active material artificial graphite, a negative electrode conductive agent Super P, a thickener sodium carboxymethyl cellulose (CMC-Na, Mw=7$\times 10^5$), and a negative electrode binder styrene-butadiene rubber (SBR, Mw=5$\times 10^6$) were mixed in a mass ratio of 97.5:1:0.5:1, with deionized water added as a solvent. The foregoing substances were stirred to uniformity in a vacuum mixer to obtain a negative electrode slurry with a solid content of 50 wt%. The negative electrode slurry was evenly applied on one surface of a negative electrode current collector copper foil with a thickness of 8 $\mu$m, dried at 85°C, and cold pressed to obtain a negative electrode plate with a negative electrode material layer with a single-surface coating thickness of 60 $\mu$m. Then, the foregoing steps were repeated on another surface of the copper foil to obtain a negative electrode plate coated with negative electrode material layers on two surfaces. Then, cutting and welding of negative electrode tab: nickel tab were performed to obtain a negative electrode plate with dimensions of 76 mm $\times$ 867 mm for later use. The compacted density of the negative electrode material layer was 1.75 g/cm$^3$.

<Preparation of lithium-ion battery>

The prepared separator, positive electrode plate, separator, and negative electrode plate were stacked in sequence and wound to obtain an electrode assembly with a wound structure. The electrode assembly was placed in an aluminum-plastic film packaging bag and dried. The electrolyte was injected, followed by processes such as vacuum sealing, standing, formation (0.3C constant current charging to 3.5 V, and then 1C constant current charging to 3.9 V), capacity grading, degassing, and trimming to obtain a lithium-ion battery.

Example 1-2 to Example 1-4

The same as Example 1-1 except that the type of the compound represented by formula I was adjusted according to Table 1 in <Preparation of electrolyte>.

Example 1-5 to Example 1-9

The same as Example 1-1 except that $F_1$ and $F_2$ were controlled according to Table 1 by controlling the coating surface density of the first binding layer and the second binding layer in <Preparation of separator>.

Example 1-10 to Example 1-13

The same as Example 1-1 except that the mass percentage A% of the compound represented by formula I was adjusted according to Table 1 in <Preparation of electrolyte>. When the mass percentage A% of the compound represented by formula I changed, the mass percentage of the base solvent changed accordingly, while the mass percentage of the lithium salt remained unchanged.

Example 2-1 to Example 2-9

The same as Example 1-1 except that the unsubstituted carboxylic ester compound was additionally added according to Table 2 in <Preparation of electrolyte>. When the mass percentage A% of the compound represented by formula I and/or the mass percentage B% of the unsubstituted carboxylic ester compound changed, the mass percentage of the base solvent changed accordingly, while the mass percentage of the lithium salt remained unchanged.

Example 3-1 to Example 3-4

The same as Example 1-1 except that ethylene carbonate and/or propylene carbonate was additionally added according to Table 3 in<Preparation of electrolyte>. When the mass percentage D% of ethylene carbonate and/or the mass percentage E% of propylene carbonate changed, the mass percentage of the base solvent changed accordingly, while the mass percentage of the lithium salt remained unchanged.

Example 3-5 to Example 3-10

The same as Example 1-1 except that fluorinated cyclic carbonate was additionally added according to Table 3 in<Preparation of electrolyte>. When the mass percentage F% of fluorinated cyclic carbonate changed, the mass percentage of the base solvent changed accordingly, while the mass percentage of the lithium salt remained unchanged.

Example 3-11

The same as Example 1-1 except that ethylene carbonate, propylene carbonate, and fluorinated cyclic carbonate were additionally added according to Table 3 in<Preparation of electrolyte>. The mass percentage of the base solvent changed accordingly and the mass percentage of the lithium salt remained unchanged.

Example 3-12 and Example 3-13

The same as Example 1-1 except that the unsubstituted carboxylic ester compound, ethylene carbonate, and propylene carbonate as were additionally added according to Table 3 in<Preparation of electrolyte>. The mass percentage of the base solvent changed accordingly and the mass percentage of the lithium salt remained unchanged.

Example 3-14 and Example 3-15

The same as Example 1-1 except that the unsubstituted carboxylic ester compound and fluorinated cyclic carbonate were additionally added according to Table 3 in<Preparation of electrolyte>. The mass percentage of the base solvent changed accordingly and the mass percentage of the lithium salt remained unchanged.

Example 3-16 and Example 3-17

The same as Example 1-1 except that the unsubstituted carboxylic ester compound, ethylene carbonate, propylene carbonate, and fluorinated cyclic carbonate were additionally added according to Table 3 in<Preparation of electrolyte>. The mass percentage of the base solvent changed accordingly and the mass percentage of the lithium salt remained unchanged.

Example 4-1 to Example 4-4

The same as Example 1-1 except that the coating amount of the binding layer was adjusted to make the area proportion of the orthographic projection of the binding layer on the surface of the porous substrate layer according to Table 4.

Example 4-5 to Example 4-8

The same as Example 1-1 except that the average particle size of the particles of the polymer was adjusted by controlling the ball milling time according to Table 4 in <Preparation of separator>.

Example 4-9 to Example 4-11

The same as Example 1-1 except that the structure, material, and weight-average molecular weight of the polymer were as shown in Table 4.

Comparative Example 1

The same as Example 1-1 except that $F_1$ and $F_2$ were made according to Table 1 by controlling the coating surface density of the first binding layer and the second binding layer, and no compound represented by formula I was added in <Preparation of separator>, so that the mass percentage of the base solvent changed accordingly, while the mass percentage of the lithium salt remained unchanged.

Comparative Example 2

The same as Comparative Example 1 except that $F_1$ and $F_2$ were adjusted according to Table 1 by controlling the coating surface density of the first binding layer and the second binding layer in <Preparation of separator>.

Comparative Example 3 and Comparative Example 4

The same as Example 1-1 except that $F_1$ and $F_2$ were adjusted according to Table 1 by controlling the coating surface density of the first binding layer and the second binding layer in <Preparation of separator>.

Comparative Example 5

The same as Comparative Example 1 except that $F_1$ and $F_2$ were adjusted according to Table 1 by controlling the coating surface density of the first binding layer and the second binding layer in <Preparation of separator>.

Comparative Example 6 and Comparative Example 7

The same as Example 1-1 except that the mass percentage A% of the compound represented by formula I was adjusted according to Table 1 in <Preparation of electrolyte>. When the mass percentage A% of the compound represented by formula I changed, the mass percentage of the base solvent changed accordingly, while the mass percentage of the lithium salt remained unchanged.

Preparation parameters and performance parameters of examples and comparative examples are shown in Table 1 to Table 4.

**Table 1**

| | Compound represented by formula I | A (%) | $F_1$ (N/m) | $F_2$ (N/m) | Number of cycles at 25°C (cycles) | Cycling swelling rate at 25°C (%) |
|---|---|---|---|---|---|---|
| Example 1-1 | Formula I-3 | 50 | 13 | 22 | 720 | 9 |
| Example 1-2 | Formula I-2 | 50 | 13 | 22 | 700 | 8.5 |
| Example 1-3 | Formula I-4 | 50 | 13 | 22 | 710 | 9 |
| Example 1-4 | Formula I-18 | 50 | 13 | 22 | 700 | 9.5 |
| Example 1-5 | Formula I-3 | 50 | 12 | 20 | 730 | 8.5 |
| Example 1-6 | Formula I-3 | 50 | 11 | 19 | 725 | 9.5 |
| Example 1-7 | Formula I-3 | 50 | 10 | 18 | 710 | 9.5 |
| Example 1-8 | Formula I-3 | 50 | 14 | 23 | 710 | 10 |
| Example 1-9 | Formula I-3 | 50 | 15 | 25 | 700 | 10.5 |

(continued)

| | Compound represented by formula I | A (%) | $F_1$ (N/m) | $F_2$ (N/m) | Number of cycles at 25°C (cycles) | Cycling swelling rate at 25°C (%) |
|---|---|---|---|---|---|---|
| Example 1-10 | Formula I-3 | 30 | 13 | 22 | 690 | 10.5 |
| Example 1-11 | Formula I-3 | 40 | 13 | 22 | 715 | 9.5 |
| Example 1-12 | Formula I-3 | 75 | 13 | 22 | 710 | 9 |
| Example 1-13 | Formula I-3 | 80 | 13 | 22 | 700 | 10 |
| Comparative Example 1 | Formula I-3 | / | 7 | 14 | 640 | 11 |
| Comparative Example 2 | Formula I-3 | / | 18 | 27 | 610 | 13 |
| Comparative Example 3 | Formula I-3 | 50 | 7 | 14 | 650 | 10.5 |
| Comparative Example 4 | Formula I-3 | 50 | 18 | 27 | 620 | 12 |
| Comparative Example 5 | Formula I-3 | / | 13 | 22 | 630 | 12.5 |
| Comparative Example 6 | Formula I-3 | 20 | 13 | 22 | 630 | 12.5 |
| Comparative Example 7 | Formula I-3 | 90 | 13 | 22 | 640 | 12 |
| Note: "/" in Table 1 indicates absence of corresponding parameters. | | | | | | |

From Example 1-1 to Example 1-13, and Comparative Example 1 to Comparative Example 7, it can be seen that in the secondary battery of the embodiments of this application, the binding force $F_1$ between the separator and the positive electrode plate and the binding force $F_2$ between the separator and the negative electrode plate are controlled within the ranges of this application, the compound represented by formula I is added into the electrolyte, and the mass percentage A% of the compound represented by formula I is within the range of this application, so that the secondary battery has a larger number of cycles at 25°C and a smaller cycling swelling rate at 25°C. This indicates that the secondary battery has good cycling performance and swelling performance. However, for the secondary batteries of Comparative Example 1 and Comparative Example 2, the electrolytes do not include the compound represented by formula I, and $F_1$ and $F_2$ are not within the ranges of this application. For the secondary batteries of Comparative Example 3 and Comparative Example 4, $F_1$ and $F_2$ are not within the ranges of this application. For the secondary battery of Comparative Example 5, the electrolyte does not include the compound represented by formula I. For the secondary batteries of Comparative Example 6 and Comparative Example 7, the mass percentages A% of the compound represented by formula I in the electrolyte are not within the ranges of this application. In the secondary batteries of Comparative Example 1 to Comparative Example 7, a smaller number of cycles at 25°C and a larger cycling swelling rate at 25°C indicate that the cycling performance and swelling performance of the secondary batteries are worse.

The values of $F_1$ and $F_2$ usually affect the cycling performance and swelling performance of the secondary battery. From Example 1-1, Example 1-5 to Example 1-9, and Comparative Example 1 to Comparative Example 4, it can be seen that when the values of $F_1$ and $F_2$ are too small, for example, as in Comparative Example 1 and Comparative Example 3, the secondary batteries have a smaller number of cycles at 25°C and a larger cycling swelling rate at 25°C. When the values of $F_1$ and $F_2$ are too large, for example, as in Comparative Example 2 and Comparative Example 4, the secondary batteries have a smaller number of cycles at 25°C and a larger cycling swelling rate at 25°C. This indicates that the cycling performance and swelling performance of the secondary batteries are worse. When the values of $F_1$ and $F_2$ are within the ranges of this application, the secondary batteries have a larger number of cycles at 25°C and a smaller cycling swelling rate at 25°C. This indicates that the secondary battery has good cycling performance and swelling performance.

The mass percentage A% of the compound represented by formula I usually affects the cycling performance and swelling performance of the secondary battery. From Example 1-1, Example 1-10 to Example 1-13, Comparative Example 1 and Comparative Example 2, and Comparative Example 5 to Comparative Example 7, it can be seen that when the value of A is too small, for example, as in Comparative Example 1, Comparative Example 2, Comparative Example 5, and Comparative Example 6, the secondary batteries have a smaller number of cycles at 25°C and a larger cycling swelling rate at 25°C. When the value of A is too large, for example, as in Comparative Example 7, the number of cycles at 25°C is smaller and the cycling swelling rate at 25°C is larger. This indicates that the cycling performance and swelling performance of the secondary batteries are worse. When the value of A is within the range of this application, the secondary battery has a larger number of cycles at 25°C and a smaller cycling swelling rate at 25°C. This indicates that the secondary battery has good cycling performance and swelling performance.

The type of the compound represented by formula I usually affects the cycling performance and swelling

performance of the secondary battery. From Example 1-1 to Example 1-4, it can be seen that when the electrolyte of the secondary battery includes the compound represented by formula I within the range of this application, the secondary battery has a larger number of cycles at 25°C and a smaller cycling swelling rate at 25°C. This indicates that the secondary battery has good cycling performance and swelling performance.

**Table 2**

| | Compound represented by formula I | A (%) | Unsubstituted carboxylic ester compound | B (%) | A/B | Number of cycles at 25°C (cycles) | Cycling swelling rate at 25°C (%) |
|---|---|---|---|---|---|---|---|
| Example 1-1 | Formula I-3 | 50 | / | / | / | 720 | 9 |
| Example 2-1 | Formula I-3 | 50 | Propyl propionate | 10 | 5.0 | 730 | 8.5 |
| Example 2-2 | Formula I-3 | 50 | Propyl propionate | 30 | 1.7 | 750 | 8 |
| Example 2-3 | Formula I-3 | 30 | Propyl propionate | 50 | 0.6 | 700 | 10.5 |
| Example 2-4 | Formula I-3 | 50 | Ethyl propionate | 30 | 1.7 | 740 | 8 |
| Example 2-5 | Formula I-3 | 30 | Propyl propionate | 30 | 1 | 730 | 9 |
| Example 2-6 | Formula I-3 | 70 | Propyl propionate | 10 | 7 | 725 | 9 |
| Example 2-7 | Formula I-3 | 80 | Propyl propionate | 10 | 8 | 690 | 11 |
| Example 2-8 | Formula I-2 | 50 | Propyl propionate | 30 | 1.7 | 715 | 8 |
| Example 2-9 | Formula I-4 | 50 | Propyl propionate | 30 | 1.7 | 725 | 8.5 |
| Note: "/" in Table 2 indicates absence of corresponding parameters. | | | | | | | |

The mass percentage B% of the unsubstituted carboxylic ester compound usually affects the cycling performance and swelling performance of the secondary battery. From Example 1-1, and Example 2-1 to Example 2-3, it can be seen that when the electrolyte of the secondary battery includes the compound represented by formula I, with the unsubstituted carboxylic ester compound further introduced and its mass percentage B% controlled within the range of this application, the values of $F_1$ and $F_2$ are larger, and therefore the secondary battery has a larger number of cycles at 25°C and a smaller cycling swelling rate at 25°C. This indicates that the secondary battery has good cycling performance and swelling performance. The inventors speculate that this is because the viscosity of the unsubstituted carboxylic ester compound is relatively low. Further introducing the unsubstituted carboxylic ester compound into the electrolyte and controlling the value of B within the range of this application can alleviate the problem of the high viscosity of the compound represented by formula I, reduce the viscosity of the electrolyte, improve the wettability of the electrolyte to the positive electrode plate and the negative electrode plate, and allow the nearby electrolyte to quickly replenish the missing part of the electrolyte when the local electrolyte is missing, thereby enabling the secondary battery to have good cycling performance and swelling performance.

The type of the unsubstituted carboxylic ester compound usually affects the cycling performance and swelling performance of the secondary battery. From Example 1-1, Example 2-2, and Example 2-4, it can be seen that when the unsubstituted carboxylic ester compound within the range of this application is selected, the values of $F_1$ and $F_2$ are larger, and the secondary battery has a larger number of cycles at 25°C and a smaller cycling swelling rate at 25°C. This indicates that the secondary battery has good cycling performance and swelling performance. This is because the viscosity of the unsubstituted carboxylic ester compound is relatively low. Therefore, further introducing the unsubstituted carboxylic ester compound within the range of this application into the electrolyte can alleviate the problem of the high viscosity of the compound represented by formula I, reduce the viscosity of the electrolyte, improve the wettability of the electrolyte to the positive electrode plate and the negative electrode plate, and allow the nearby electrolyte to quickly replenish the missing part of the electrolyte when the local electrolyte is missing, thereby enabling the secondary battery to have good cycling performance and swelling performance.

The value of A/B usually affects the cycling performance and swelling performance of the secondary battery. From Example 1-1, and Example 2-1 to Example 2-9, it can be seen that when the value of A/B is within the range of this application, the values of $F_1$ and $F_2$ are larger, and the secondary battery has a larger number of cycles at 25°C and a smaller cycling swelling rate at 25°C. This indicates that the secondary battery has good cycling performance and swelling performance.

Table 3

| | A (%) | Unsubstituted carboxylic ester compound | B (%) | D+E (%) | D (%) | E (%) | Fluorinated cyclic carbonate | F (%) | Number of cycles at 25°C (cycles) | Cycling swelling rate at 25°C (%) |
|---|---|---|---|---|---|---|---|---|---|---|
| Example 1-1 | 50 | / | / | / | / | / | / | / | 720 | 9 |
| Example 3-1 | 50 | / | / | 5 | 2.5 | 2.5 | / | / | 730 | 8.5 |
| Example 3-2 | 50 | / | / | 10 | 5 | 5 | / | / | 735 | 8 |
| Example 3-3 | 50 | / | / | 10 | / | 10 | / | / | 730 | 8.5 |
| Example 3-4 | 50 | / | / | 10 | 10 | / | / | / | 735 | 8 |
| Example 3-5 | 50 | / | / | / | / | / | Formula II-1 | 1 | 725 | 9 |
| Example 3-6 | 50 | / | / | / | / | / | Formula II-1 | 3 | 739 | 8.3 |
| Example 3 -7 | 50 | / | / | / | / | / | Formula II-1 | 5 | 750 | 8 |
| Example 3-8 | 50 | / | / | / | / | / | Formula II-1 | 10 | 780 | 7.5 |
| Example 3-9 | 50 | / | / | / | / | / | Formula II-1 | 20 | 735 | 8.5 |
| Example 3-10 | 50 | / | / | / | / | / | Formula II-2 | 10 | 770 | 8 |
| Example 3-11 | 50 | / | / | 10 | 5 | 5 | Formula II-1 | 10 | 790 | 7.5 |
| Example 3-12 | 50 | Propyl propionate | 30 | 10 | 5 | 5 | / | / | 765 | 7.5 |
| Example 3-13 | 50 | Ethyl propionate | 30 | 10 | 5 | 5 | / | / | 755 | 8 |
| Example 3-14 | 50 | Propyl propionate | 30 | / | / | / | Formula II-1 | 10 | 800 | 7 |
| Example 3-15 | 50 | Ethyl propionate | 30 | / | / | / | Formula II-1 | 10 | 795 | 7.5 |
| Example 3-16 | 40 | Propyl propionate | 30 | 10 | 5 | 5 | Formula II-1 | 10 | 840 | 7.5 |
| Example 3-17 | 40 | Ethyl propionate | 30 | 10 | 5 | 5 | Formula II-1 | 10 | 820 | 8 |
| Note: "/" in Table 3 indicates absence of corresponding parameters. | | | | | | | | | | |

The mass percentage D% of ethylene carbonate, the mass percentage E% of propylene carbonate, and the value of D+E usually affect the cycling performance and swelling performance of the secondary battery. From Example 1-1 and Example 3-1 to Example 3-4, it can be seen that when the electrolyte of the secondary battery includes the compound represented by formula I, with ethylene carbonate and/or propylene carbonate further introduced and their mass percentages D% and E% and the value of D+E controlled within the ranges of this application, the values of $F_1$ and $F_2$ are larger, and the secondary battery has a larger number of cycles at 25°C and a smaller cycling swelling rate at 25°C.

This indicates that the secondary battery has good cycling performance and swelling performance. This is because further introducing ethylene carbonate and/or propylene carbonate into the electrolyte and controlling the values of D+E, D, and E within the ranges of this application are conducive to the dissociation of a lithium salt in the electrolyte, improving the conductivity of the electrolyte, and reducing the polarization of the secondary battery. This also facilitates film formation by lithium salt anions at the interface of the positive electrode or negative electrode, so as to form a CEI film or an SEI film rich in inorganic substances, enhancing the interfacial stability between the positive electrode plate and the electrolyte, and between the negative electrode plate and the electrolyte, thereby allowing the secondary battery to have good cycling performance and swelling performance.

The mass percentage F% of fluorinated cyclic carbonate usually affects the cycling performance and swelling performance of the secondary battery. From Example 1-1 and Example 3-5 to Example 3-9, it can be seen that when the electrolyte of the secondary battery includes the compound represented by formula I, with fluorinated cyclic carbonate further introduced and its mass percentages F% controlled within the range of this application, the values of $F_1$ and $F_2$ are larger, and the secondary battery has a larger number of cycles at 25°C and a smaller cycling swelling rate at 25°C. This indicates that the secondary battery has good cycling performance and swelling performance. This is because with fluorinated cyclic carbonate further introduced into the electrolyte and the value of F controlled within the range of this application, the reduction potential of fluorinated cyclic carbonate is high, allowing for preferential film formation at the interface of the negative electrode to protect the interface of the negative electrode by reducing side reactions between the negative electrode plate and the electrolyte. This improves the interfacial stability between the negative electrode plate and the electrolyte, thereby enabling the secondary battery to have good cycling performance and swelling performance.

The type of fluorinated cyclic carbonate usually affects the cycling performance and swelling performance of the secondary battery. From Example 1-1, Example 3-8, and Example 3-10, it can be seen that when fluorinated cyclic carbonate within the range of this application is selected, the values of $F_1$ and $F_2$ are larger, and the secondary battery has a larger number of cycles at 25°C and a smaller cycling swelling rate at 25°C. This indicates that the secondary battery has good cycling performance and swelling performance. This is because with fluorinated cyclic carbonate within the range of this application further introduced in the electrolyte, the reduction potential of fluorinated cyclic carbonate is high, allowing for preferential film formation at the interface of the negative electrode to protect the interface of the negative electrode by reducing side reactions between the negative electrode plate and the electrolyte. This improves the interfacial stability between the negative electrode plate and the electrolyte, thereby enabling the secondary battery to have good cycling performance and swelling performance.

From Example 1-1 and Example 3-11 to Example 3-17, it can be seen that when the electrolyte of the secondary battery includes the compound represented by formula I, with at least one of the unsubstituted carboxylic ester compound, ethylene carbonate, propylene carbonate, and fluorinated cyclic carbonate further introduced, the values of $F_1$ and $F_2$ are larger, and the secondary battery has a larger number of cycles at 25°C and a smaller cycling swelling rate at 25°C. This indicates that the secondary battery has good cycling performance and swelling performance. The compound represented by formula I has good compatibility and stackability with the unsubstituted carboxylic ester compound, ethylene carbonate, propylene carbonate, and fluorinated cyclic carbonate. The combination of these substances applied to the secondary battery is more conducive to enabling the secondary battery to have good cycling performance and swelling performance.

**Table 4**

| | Area proportion of orthographic projection of binding layer on surface of porous substrate layer (%) | Average particle size of particles of polymer (μm) | Structure of polymer | Material of polymer | Weight-average molecular weight of polymer | $F_1$ (N/m) | $F_2$ (N/m) | Number of cycles at 25°C (cycles) | Cycling swelling rate at 25°C (%) |
|---|---|---|---|---|---|---|---|---|---|
| Example 1-1 | 50 | 0.6 | Kernel-shell | Kernel: PVDF Shell: PVDF-HFP copolymer | Kernel: Mw= 1.5 million; Shell: Mw= 1.5 million; kernel-shell mass ratio 1:1 | 13 | 22 | 720 | 9 |

(continued)

| | Area proportion of orthographic projection of binding layer on surface of porous substrate layer (%) | Average particle size of particles of polymer (μm) | Structure of polymer | Material of polymer | Weight-average molecular weight of polymer | $F_1$ (N/m) | $F_2$ (N/m) | Number of cycles at 25°C (cycles) | Cycling swelling rate at 25°C (%) |
|---|---|---|---|---|---|---|---|---|---|
| Example 4-1 | 15 | 0.6 | Kernel-shell | Kernel: PVDF Shell: PVDF-HFP copolymer | Kernel: Mw= 1.5 million; Shell: Mw= 1.5 million; kernel-shell mass ratio 1:1 | 10 | 19 | 705 | 10 |
| Example 4-2 | 30 | 0.6 | Kernel-shell | Kernel: PVDF Shell: PVDF-HFP copolymer | Kernel: Mw= 1.5 million; Shell: Mw= 1.5 million; kernel-shell mass ratio 1:1 | 11 | 20 | 710 | 9.5 |
| Example 4-3 | 70 | 0.6 | Kernel-shell | Kernel: PVDF Shell: PVDF-HFP copolymer | Kernel: Mw= 1.5 million; Shell: Mw= 1.5 million; kernel-shell mass ratio 1:1 | 14 | 23 | 725 | 9 |
| Example 4-4 | 85 | 0.6 | Kernel-shell | Kernel: PVDF Shell: PVDF-HFP copolymer | Kernel: Mw= 1.5 million; Shell: Mw= 1.5 million; kernel-shell mass ratio 1:1 | 15 | 24 | 700 | 10 |
| Example 4-5 | 50 | 0.2 | Kernel-shell | Kernel: PVDF Shell: PVDF-HFP copolymer | Kernel: Mw= 1.5 million; Shell: Mw= 1.5 million; kernel-shell mass ratio 1:1 | 14 | 24 | 715 | 9.5 |
| Example 4-6 | 50 | 0.3 | Kernel-shell | Kernel: PVDF Shell: PVDF-HFP copolymer | Kernel: Mw= 1.5 million; Shell: Mw= 1.5 million; kernel-shell mass ratio 1:1 | 13 | 23 | 725 | 8.5 |
| Example 4-7 | 50 | 1 | Kernel-shell | Kernel: PVDF Shell: PVDF-HFP copolymer | Kernel: Mw= 1.5 million; Shell: Mw= 1.5 million; kernel-shell mass ratio 1:1 | 12 | 20 | 715 | 9 |

(continued)

| | Area proportion of orthographic projection of binding layer on surface of porous substrate layer (%) | Average particle size of particles of polymer (μm) | Structure of polymer | Material of polymer | Weight-average molecular weight of polymer | $F_1$ (N/m) | $F_2$ (N/m) | Number of cycles at 25°C (cycles) | Cycling swelling rate at 25°C (%) |
|---|---|---|---|---|---|---|---|---|---|
| Example 4-8 | 50 | 2 | Kernel-shell | Kernel: PVDF Shell: PVDF-HFP copolymer | Kernel: Mw= 1.5 million; Shell: Mw= 1.5 million; kernel-shell mass ratio 1:1 | 10 | 18 | 710 | 9.5 |
| Example 4-9 | 50 | 0.6 | Non-kernel-shell | PVDF | Mw= 1.5 million | 12 | 20 | 715 | 9 |
| Example 4-10 | 50 | 0.6 | Kernel-shell | Kernel: PVDF Shell: PVDF-HFP copolymer | Kernel: Mw=300,000; Shell: Mw=300,000; kernel-shell mass ratio 1:1 | 15 | 23 | 710 | 9.5 |
| Example 4-11 | 50 | 0.6 | Kernel-shell | Kernel: PVDF Shell: PVDF-HFP copolymer | Kernel: Mw=3 million; Shell: Mw=3 million; kernel-shell mass ratio 1:1 | 11 | 20 | 715 | 9 |

The area proportion of the orthographic projection of the binding layer on the surface of the porous substrate layer usually affects the cycling performance and swelling performance of the secondary battery. From Example 1-1 and Example 4-1 to Example 4-4, it can be seen that when the area proportion of the orthographic projection of the binding layer on the surface of the porous substrate layer is within the range of this application, the values of $F_1$ and $F_2$ are larger, and the secondary battery has a larger number of cycles at 25°C and a smaller cycling swelling rate at 25°C. This indicates that the secondary battery has good cycling performance and swelling performance.

The average particle size of the particles of the polymer usually affects the cycling performance and swelling performance of the secondary battery. From Example 1-1 and Example 4-5 to Example 4-8, it can be seen that when the average particle size of the particles of the polymer is within the range of this application, the values of $F_1$ and $F_2$ are larger, and the secondary battery has a larger number of cycles at 25°C and a smaller cycling swelling rate at 25°C. This indicates that the secondary battery has good cycling performance and swelling performance.

The type of polymer usually affects the cycling performance and swelling performance of the secondary battery. From Example 1-1 and Example 4-9, it can be seen that when the type of polymer is within the range of this application, the values of $F_1$ and $F_2$ are larger, and the secondary battery has a larger number of cycles at 25°C and a smaller cycling swelling rate at 25°C. This indicates that the secondary battery has good cycling performance and swelling performance.

The weight-average molecular weight of the polymer usually affects the cycling performance and swelling performance of the secondary battery. From Example 1-1 and Example 4-10 and Example 4-11, it can be seen that when the weight-average molecular weight of the polymer is within the range of this application, the values of $F_1$ and $F_2$ are larger, and the secondary battery has a larger number of cycles at 25°C and a smaller cycling swelling rate at 25°C. This indicates that the secondary battery has good cycling performance and swelling performance.

It should be noted that relational terms such as "first" and "second" are only used to distinguish one entity or operation from another entity or operation, and do not necessarily require or imply that there is any such actual relationship or order between these entities or operations. Terms "include", "comprise", or any other variations thereof are intended to cover non-exclusive inclusions, such that a process, method, article or device including a series of elements not only

includes these elements, but also includes other elements which are not expressly listed, or further includes elements which are inherent to such process, method, or article.

The embodiments in this specification are described in a related manner. For a part that is the same or similar between different embodiments, reference may be made between the embodiments. Each embodiment focuses on differences from other embodiments.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. A secondary battery, comprising: a positive electrode plate, a negative electrode plate, a separator, and an electrolyte; **characterized in that**, the electrolyte comprises a compound represented by formula I,

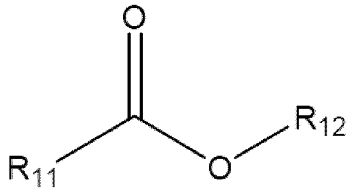

formula I,

$R_{11}$ and $R_{12}$ are each independently selected from halogen-substituted or unsubstituted $C_1$ to $C_6$ alkyl, at least one of $R_{11}$ or $R_{12}$ is substituted with halogen; and based on a mass of the electrolyte, a mass percentage of the compound represented by formula I is A%, $30 \leq A \leq 80$; and

the separator comprises a porous substrate layer and binding layers disposed on two surfaces of the porous substrate layer, the binding layer comprises a polymer, a binding force between the separator and the positive electrode plate is $F_1$ N/m, wherein $10 \leq F_1 \leq 15$, and a binding force between the separator and the negative electrode plate is $F_2$ N/m, wherein $18 \leq F_2 \leq 25$.

2. The secondary battery according to claim 1, **characterized in that**,
at least one of $R_{11}$ or $R_{12}$ is substituted with F; and/or

$$40 \leq A \leq 75.$$

3. The secondary battery according to claim 1 or 2, **characterized in that**, the compound represented by formula I comprises at least one of the following compounds:

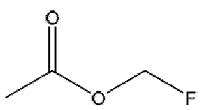 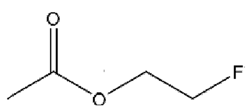 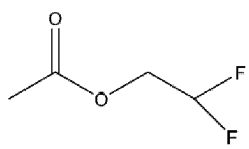 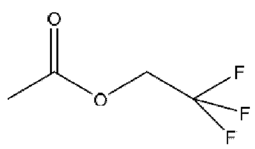

formula I-1, formula I-2, formula I-3, formula I-4,

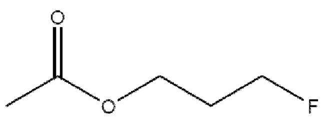 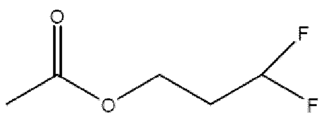 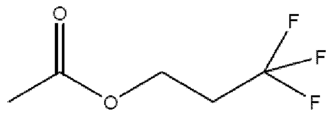

formula I-5, formula I-6, formula I-7,

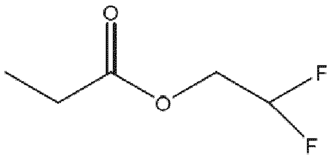 formula I-8, 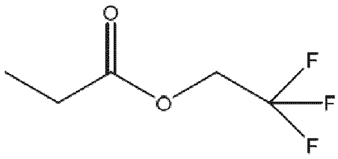 formula I-9, 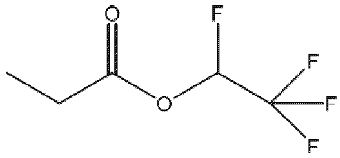 formula I-10,

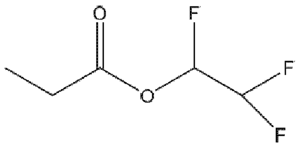 formula I-11, 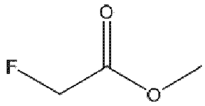 formula I-12, 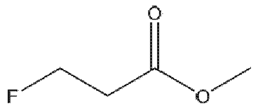 formula I-13, 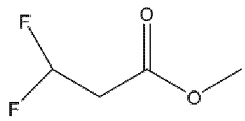 formula I-14,

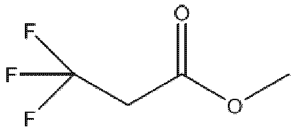 formula I-15, 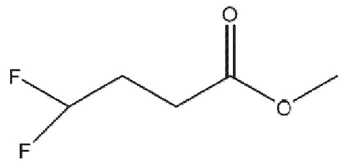 formula I-16, 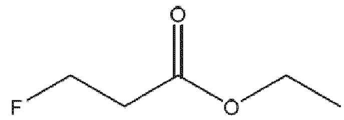 formula I-17,

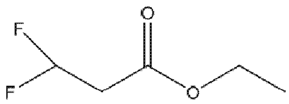 formula I-18, 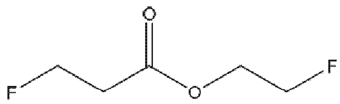 formula I-19, or 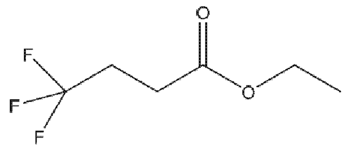 formula I-20.

4. The secondary battery according to any one of claims 1 to 3, **characterized in that**, the electrolyte further comprises an unsubstituted carboxylic ester compound; the unsubstituted carboxylic ester compound comprises at least one of methyl formate, ethyl formate, methyl acetate, ethyl acetate, propyl acetate, methyl propionate, ethyl propionate, or propyl propionate; and
based on the mass of the electrolyte, a mass percentage of the unsubstituted carboxylic ester compound is B%, wherein $10 \leq B \leq 50$.

5. The secondary battery according to claim 4, **characterized in that**, $1 \leq A/B \leq 7$.

6. The secondary battery according to any one of claims 1 to 5, **characterized in that**, an area proportion of an orthographic projection of the binding layer on a surface of the porous substrate layer is 15% to 85%; and/or
an average particle size of particles of the polymer is 0.2 $\mu$m to 2 $\mu$m.

7. The secondary battery according to any one of claims 1 to 6, **characterized in that**, the secondary battery meets at least one of the following characteristics:

(1) an area proportion of an orthographic projection of the binding layer on a surface of the porous substrate layer is 30% to 70%;
(2) an average particle size of particles of the polymer is 0.3 $\mu$m to 1 $\mu$m; or
(3) a weight-average molecular weight of the polymer is 300,000 to 3,000,000.

8. The secondary battery according to any one of claims 1 to 7, **characterized in that**,

the polymer comprises a non-kernel-shell structure polymer, and the non-kernel-shell structure polymer comprises at least one of polyvinylidene fluoride, vinylidene fluoride-hexafluoropropylene copolymer, styrene-butadiene copolymer, polyacrylonitrile, butadiene-acrylonitrile copolymer, polyacrylic acid, polyacrylate, or acrylate-styrene copolymer; or
the polymer comprises a kernel-shell structure polymer, and a polymer of a kernel of the kernel-shell structure polymer comprises at least one of polyvinylidene fluoride, polyacrylate, or acrylate-acrylonitrile copolymer, and a polymer of a shell of the kernel-shell structure polymer comprises at least one of vinylidene fluoride-hexafluoropropylene copolymer, styrene-acrylate copolymer, or acrylate-acrylate copolymer.

**9.** The secondary battery according to any one of claims 1 to 8, **characterized in that**, the electrolyte further comprises ethylene carbonate and propylene carbonate; and based on the mass of the electrolyte, a mass percentage of ethylene carbonate is D% and a mass percentage of propylene carbonate is E%, wherein $0 \leq D+E \leq 10$, and $0 \leq D \leq 10$.

**10.** The secondary battery according to claim 9, **characterized in that**, $0 \leq E \leq 10$.

**11.** The secondary battery according to any one of claims 1 to 10, **characterized in that**, the electrolyte further comprises fluorinated cyclic carbonate; based on the mass of the electrolyte, a mass percentage of the fluorinated cyclic carbonate is F%, wherein $1 \leq F \leq 20$; and the fluorinated cyclic carbonate comprises at least one of the following compounds:

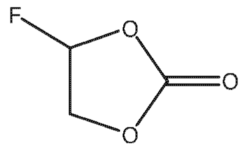
formula II-1 ,
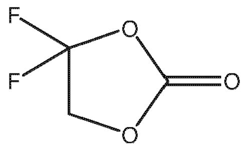
formula II-2,

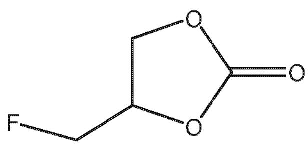
formula II-3 ,
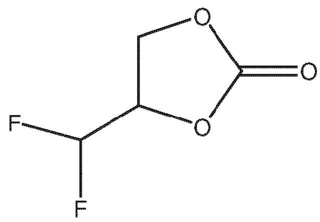
formula II-4,

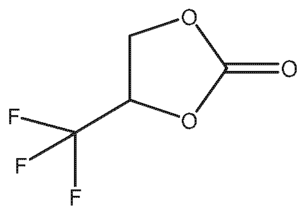
formula II-5 ,
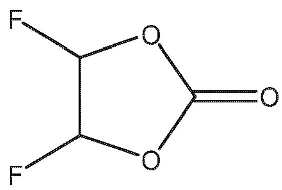
formula II-6,

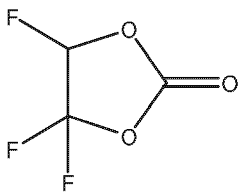
formula II-7 ,
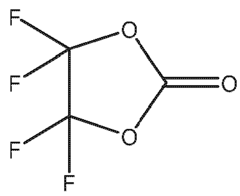
formula II-8,

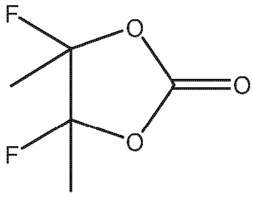
formula II-9 ,
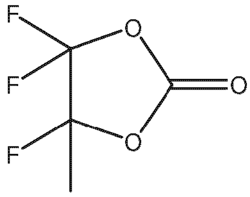
formula II-10,

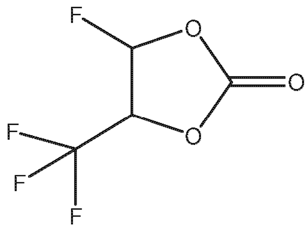
formula II-11 , or
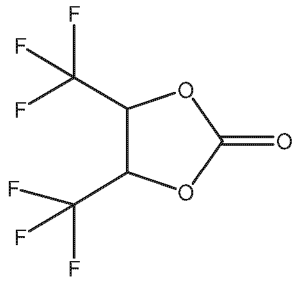
formula II-12.

**12.** The secondary battery according to claim 11, **characterized in that**, 3 ≤ F ≤ 10.

**13.** An electronic apparatus, comprising the secondary battery according to any one of claims 1 to 12.

Europäisches Patentamt
European Patent Office
Office européen des brevets

# EUROPEAN SEARCH REPORT

Application Number
EP 25 16 1878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | EP 4 246 646 A1 (TERAWATT TECH K K [JP]) 20 September 2023 (2023-09-20)<br>* par. 89, 99,95; page 14, table 1, examples 3-6 *<br>----- | 1,2,4-8, 13<br>3,9-12 | INV.<br>H01M10/0567<br>H01M10/0569<br>H01M50/449<br>H01M50/46 |
| Y | JP WO20 1704 7020 A1 (PANASONIC IP MAN CO LTD) 5 July 2018 (2018-07-05)<br>* par 103; claim 3 *<br>----- | 3,9-12 | |
| | | | TECHNICAL FIELDS SEARCHED (IPC) |
| | | | H01M |

The present search report has been drawn up for all claims

2

| Place of search | Date of completion of the search | Examiner |
|---|---|---|
| Munich | 14 July 2025 | Bettio, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 16 1878

This annex lists the patent family members relating to the patent documents cited in the above-mentioned European search report. The members are as contained in the European Patent Office EDP file on The European Patent Office is in no way liable for these particulars which are merely given for the purpose of information.

14-07-2025

| Patent document cited in search report | Publication date | Patent family member(s) | Publication date |
|---|---|---|---|
| EP 4246646 A1 | 20-09-2023 | CN 116438692 A | 14-07-2023 |
| | | EP 4246646 A1 | 20-09-2023 |
| | | JP 7537789 B2 | 21-08-2024 |
| | | JP WO2022102072 A1 | 19-05-2022 |
| | | KR 20230092997 A | 26-06-2023 |
| | | US 2023282885 A1 | 07-09-2023 |
| | | WO 2022102072 A1 | 19-05-2022 |
| JP WO2017047020 A1 | 05-07-2018 | CN 107408737 A | 28-11-2017 |
| | | JP 6861402 B2 | 21-04-2021 |
| | | JP WO2017047020 A1 | 05-07-2018 |
| | | US 2018090790 A1 | 29-03-2018 |
| | | US 2020411848 A1 | 31-12-2020 |
| | | WO 2017047020 A1 | 23-03-2017 |

EPO FORM P0459

For more details about this annex : see Official Journal of the European Patent Office, No. 12/82